# EUROPÄISCHE PATENTSCHRIFT

(11) **EP 3 938 256 B1**
(45) Veröffentlichungstag und Bekanntmachung des Hinweises auf die Patenterteilung: **06.09.2023**
(21) Anmeldenummer: 20711808.4
(22) Anmeldetag: 04.03.2020
(51) Int. Cl.: B60T 8/34, B60T 8/88, B60T 13/66, B60T 13/68, B60T 17/18

(54) **ELEKTRONISCH STEUERBARES BREMSSYSTEM MIT ZWEI RÜCKFALLEBENEN**
BRAKE-BY-WIRE WITH 2 DEGRADED MODES
SYSTÈME DE FREINAGE ÉLECTRIQUEMENT ASSISTÉ AYANT DEUX MODES DÉGRADÉS

(30) Priorität: 15.03.2019 DE 102019106591
(43) Veröffentlichungstag der Anmeldung: 19.01.2022
(73) Patentinhaber: ZF CV Systems Europe BV, 1170 Brussels (BE)
(72) Erfinder: VAN THIEL, Julian, 30938 Grossburgwedel (DE)
(74) Vertreter: Rabe, Dirk-Heinrich
(86) Internationale Anmeldenummer: PCT/EP2020/055666
(87) Internationale Veröffentlichungsnummer: WO 2020/187569

(56) Entgegenhaltungen:
- DE-A1-102016 005 318
- US-A1- 2018 334 150

## Beschreibung

Die Erfindung betrifft ein elektronisch steuerbares Bremssystem, insbesondere ein elektronisch steuerbares pneumatisches Bremssystem, für ein Fahrzeug, insbesondere Nutzfahrzeug, mindestens aufweisend ein Betriebsbrems-Subsystem mit einem Vorderachs-Betriebsbremskreis mit Vorderachs-Betriebsbremsen, einem Hinterachs-Betriebsbremskreis mit Hinterachs-Betriebsbremsen und einem Betriebsbrems-Steuermodul, wobei den Vorderachs-Betriebsbremsen ein Vorderachs-Betriebsbremsdruck und den Hinterachs-Betriebsbremsen ein Hinterachs-Betriebsbremsdruck zuführbar ist und das Betriebsbrems-Steuermodul ausgebildet ist, in Abhängigkeit einer Bremsvorgabe ein Betriebsbrems-Steuersignal zu erzeugen, wobei der Vorderachsund Hinterachs-Betriebsbremsdruck in Abhängigkeit des Betriebsbrems-Steuersignals erzeugt und an die Vorderachs- und Hinterachs-Betriebsbremsen vorgegeben werden kann zum von dem Betriebsbrems-Steuermodul elektrisch gesteuerten Umsetzen der Bremsvorgabe über den Vorderachs-Betriebsbremskreis und den Hinterachs-Betriebsbremskreis. Die Erfindung betrifft ferner ein Fahrzeug sowie ein Verfahren zum Steuern eines elektronisch steuerbaren Bremssystems der eingangs genannten Art.

Ein Bremssystem in einem Fahrzeug, vorzugsweise Nutzfahrzeug, kann mit zwei oder mehreren Betriebsbremskreisen, in denen ein an Betriebsbremsen ausgesteuerter Betriebsbrems-Bremsdruck eingestellt wird, sowie ein Parkbremskreis, in dem ein an Federspeicherbremsen ausgesteuerter Parkbrems-Bremsdruck eingestellt wird, vorgesehen sein. Die Aussteuerung des Betriebsbrems-Bremsdruckes an die Betriebsbremsen erfolgt beispielsweise über einen Druckmodulator, der gemäß einer Betriebsbrems-Bremsvorgabe in Form eines pneumatischen Betriebsbrems-Steuerdruckes oder eines elektrischen Betriebsbrems-Steuersignals einen Betriebsbrems-Bremsdruck an die jeweiligen Betriebsbremsen ausgibt.

Im normalen Betrieb erfolgt die Vorgabe an den Druckmodulator elektrisch über das Betriebsbrems-Steuersignal, wobei das Betriebsbrems-Steuersignal von einem Betriebsbrems-Steuermodul in Abhängigkeit einer manuell vorgegebenen Betriebsbrems-Bremsvorgabe und/oder in Abhängigkeit einer von einem Assistenzsystem automatisiert angeforderten Assistenz-Bremsvorgabe ermittelt und ausgegeben wird. Im Redundanzfall, z. B. bei einem elektrischen Ausfall des Betriebsbrems-Steuermoduls, erfolgt die Vorgabe an den Druckmodulator bei bekannten Bremssystemen häufig über den Betriebsbrems-Steuerdruck, der dem Druckmodulator über einen pneumatischen Redundanzanschluss vorgegeben wird und der beispielsweise von einer als elektropneumatisches Betriebsbremsventil ausgeführten Betriebsbrems-Betätigungsvorrichtung mit einem Bremspedal in Abhängigkeit der Betriebsbrems-Bremsvorgabe ausgegeben wird.

Der Parkbremskreis dient vorrangig dazu, das Fahrzeug in einer Parksituation abzustellen oder eine Hilfsbremsung oder Notbremsung während der Fahrt durchzuführen, indem gesteuert von einem Parkbrems-Steuermodul ein Parkbrems-Bremsdruck ausgesteuert wird, in Abhängigkeit dessen die Federspeicherbremsen zugespannt werden, wobei zum Zuspannen der Parkbrems-Bremsdruck reduziert wird. Beispielhaft ist ein derartiges Parkbrems-Steuermodul bzw. Feststellbremsmodul in DE 10 2015 008 377 A1 beschrieben. Herkömmlicherweise arbeiten der Parkbremskreis und die Betriebsbremskreise getrennt voneinander. In bestimmten Anwendungen ist es möglich, den oben geschilderten Redundanzmechanismus der Betriebsbremse durch die alternative Ansteuerung des Feststellbremskreises zu ersetzen. Dazu muss die elektrische Spannungsversorgung der Parkbremse üblicherweise unabhängig von der Spannungsversorgung der Betriebsbremse erfolgen.

Bei einem Ausfall der elektrischen Ansteuerung der Betriebsbremskreise über das Betriebsbrems-Steuermodul kann wie beschrieben eine pneumatische durch den Fahrer gesteuerte erste Rückfallebene ausgebildet werden. Steht der Fahrer allerdings nicht als Rückfallebene zur Verfügung, da er z.B. unaufmerksam oder im Falle von höher automatisierten Fahrmanövern nicht am Platz ist, kann eine zweite Rückfallebene ausgebildet werden, die automatisiert und elektronisch gesteuert eingreifen kann, wobei dazu der vorhandene Parkbremskreis verwendet wird. Die automatisierte Bremsanforderung wird nach Erkennen des elektrischen Ausfalls in einem der Betriebsbremskreise dem Parkbrems-Steuermodul zugeführt, das durch eine Vorgabe des Parkbrems-Bremsdruckes entsprechend die Federspeicherbremsen betätigen kann, um den elektrischen Ausfall der Betriebsbremsen zu kompensieren. Alternativ kann die automatisierte Bremsanforderung dem Parkbrems Steuermodul permanent zugeführt werden und bei Erkennen eines Ausfalls in mindestens einem der Betriebsbremskreise durch das Parkbrems-Steuermodul, dieses durch eine Vorgabe des Parkbrems-Bremsdruckes entsprechend die Federspeicherbremsen betätigen. In dem Fall ist jedoch unter Umständen lediglich eine Fahrzeugachse, an der die Federspeicherbremsen im Parkbremskreis angeordnet sind, abgebremst. Dies kann zu einer eingeschränkten Verzögerungsleistung und ggf. zusätzlichen Instabilitäten während der Fahrt führen.

Um dies zu vermeiden, ist in EP 2 090 481 B1 ein elektronisch steuerbares Bremssystem beschrieben, in dem ein Hinterachs-Betriebsbremskreis von einem Hinterachs-Betriebsbrems-Steuermodul gesteuert wird und ein Vorderachs-Betriebsbremskreis von einem Vorderachs-Betriebsbrems-Steuermodul. Im Vorderachs-Betriebsbrems-Steuermodul ist das Parkbrems-Steuermodul für den Parkbremskreis integriert, wobei der Parkbremskreis Federspeicherbremsen an der Hinterachse steuert. Das Hinterachs-Betriebsbrems-Steuermodul sowie die Komponenten des Hinterachs-Betriebsbremskreises werden von einer ersten Energiequelle und das Vorderachs-Betriebsbrems-Steuermodul sowie das Parkbrems-Steuermodul mit den entsprechend zugeordneten Komponenten werden von einer zweiten Energiequelle mit Energie versorgt.

Bei einem Ausfall der ersten Energiequelle, d.h. dem Hinterachs-Betriebsbremskreis mit den Betriebsbremsen an der Hinterachse, kann die Vorderachse weiter über den Vorderachs-Betriebsbremskreis und die Hinterachse über den Parkbremskreis gebremst werden, so dass weiterhin beide Fahrzeugachsen abgebremst werden können. Der Parkbremskreis kompensiert somit den Ausfall des Hinterachs-Betriebsbremskreises, indem an der Hinterachse statt mit den Betriebsbremsen mit den Federspeicherbremsen gebremst wird. Bei einem Ausfall der zweiten Energiequelle, d.h. sowohl des Parkbremskreises an der Hinterachse als auch des Vorderachs Betriebsbremskreises, wird von dem Hinterachs-Betriebsbrems-Steuermodul ein Betriebsbrems-Steuersignal ausgegeben, das - wie im normalen Betrieb - an den Hinterachs-Druckmodulator aber zusätzlich auch an ein Anhängersteuerventil des Fahrzeuges übertragen wird. Von dem Anhängersteuerventil wird ein entsprechender Steuerdruck erzeugt, der - falls vorhanden - auf den Anhänger übertragen wird, um dort eine Bremsung zu bewirken, und gleichzeitig auch über eine Redundanz-Druckleitung zum pneumatischen Redundanzanschluss am Vorderachs-Druckmodulator. Die Hinterachse und die Vorderachse werden somit - wie im normalen Betrieb - über die Betriebsbremsen abgebremst, wobei die Vorderachse ebenfalls durch das Hinterachs-Betriebsbrems-Steuermodul gesteuert wird.

Das Parkbrems-Steuermodul kann weiterhin einen Parkbrems-Steuerdruck an das Anhängersteuerventil ausgeben, das diesen invertiert und an die Betriebsbremsen des Anhängers weiterleitet, um auch im Anhänger eine Parkbremsfunktion umsetzen zu können.

Somit ist im Stand der Technik vorgeschlagen, jeden Betriebsbremskreis über separate Steuermodule anzusteuern und einen Ausfall einer Energiequelle und somit zumindest eines Betriebsbremskreises dadurch zu kompensieren, dass der oder die jeweils noch funktionierenden Bremskreise eine Bremsung an der ausgefallenen Fahrzeugachse übernehmen, so dass auch im Redundanzfall noch beide Fahrzeugachsen für eine Bremsung herangezogen werden können.

Nachteilig hierbei ist, dass in elektronisch gesteuerten Bremssystemen, die über lediglich ein zentrales Betriebsbrems-Steuermodul die Betriebsbremsen an der Hinterachse und der Vorderachse und ggf. weiteren Fahrzeugachsen über den Druckmodulator ansteuern, keine derartige Kompensation stattfinden kann, da bei einem Ausfall der Energiequelle oder einzelner elektrischer Komponenten des jeweiligen Betriebsbremskreises das zentrale Betriebsbrems-Steuermodul nicht mehr die elektrische Ansteuerung der Betriebsbremsen bzw. der vorgeschalteten Druckmodulatoren an einzelnen Fahrzeugachsen übernehmen kann. Somit kann - falls in dem entsprechenden Bremssystem vorhanden - lediglich auf die pneumatische, vom Fahrer gesteuerte erste Rückfallebene ausgewichen werden, falls der Fahrer auch tatsächlich manuell eingreift. Eine rein elektronische Bremsvorgabe wie sie in EP 2 090 481 B1 beschrieben ist bzw. eine mögliche automatisiert vorgegeben Assistenz-Bremsvorgabe kann jedoch nicht mehr umgesetzt werden.

Weiterhin ist aus DE 10 2015 011 296 A1 ein elektronisch steuerbares pneumatisches Bremssystem bekannt, welches aufweist: mindestens einen Bremskreis, wobei in dem mindestens einen Bremskreis unabhängig voneinander Bremsdrücke an Betriebsbremsen einstellbar sind, wobei dem mindestens einen Bremskreis dazu mindestens ein Steuerventil zugeordnet ist. Das mindestens eine Steuerventil hat einen elektronischen Steuereingang zum Aufnehmen eines elektrischen Steuersignals und einen pneumatischen Steuereingang zum Aufnehmen eines Steuerdrucks. Das mindestens eine Steuerventil versorgt in Abhängigkeit des Steuersignals oder des Steuerdrucks über Arbeitsanschlüsse die Betriebsbremsen des mindestens einen Bremskreises mit Bremsdruck. Eine erste Steuereinheit ist vorgesehen zum Ausgeben der Steuersignale in Abhängigkeit einer Fahrzeugsollverzögerung zum elektrischen Ansteuern des mindestens einen Steuerventils, wobei die Fahrzeugsollverzögerung von einem ersten Bremsventil vorgegeben werden kann. Das erste Bremsventil gibt einen ersten Bremsventilsteuerdruck an den mindestens einen Bremskreis vor. Ferner hat das Bremssystem ein zweites Bremsventil zum Ausgeben eines zweiten Bremsventil-Steuerdrucks, das derartig im pneumatischen Bremssystem angeordnet ist, dass der erste Bremsventil-Steuerdruck des ersten Bremsventils und/oder der zweite Bremsventil-Steuerdruck des zweiten Bremsventils als Steuerdruck an das mindestens eine Steuerventil ausgegeben wird zum pneumatischen Ansteuern des mindestens einen Steuerventils, wobei das zweite Bremsventil elektronisch ansteuerbar ist, wenn eine elektrische Ansteuerung des mindestens einen Steuerventils verhindert ist zum Ausbilden einer elektronisch pneumatisch gesteuerten Redundanz. In diesem Beispiel ersetzen sich die beiden Steuerventile also wechselseitig, um die Redundanz zu erzeugen.

Ein ähnliches System ist in DE 10 2016 005 318 A1 offenbart. Das dort offenbarte Bremssystem weist wiederum mindestens zwei Bremskreise auf, wobei mindestens einem der mindestens zwei Bremskreise ein elektrisch und pneumatisch steuerbares Steuerventil und einem weiteren der mindestens zwei Bremskreise ein elektrisch steuerbares Parkbremsventil zugeordnet ist, zum Vorgeben von Bremsdrücken zur Ansteuerung von Radbremsen des jeweiligen Bremskreises. Eine erste Steuereinheit ist vorgesehen, die ausgebildet ist, das jeweilige Steuerventil in Abhängigkeit einer automatisiert angeforderten Fahrzeugsollverzögerung oder einer vom Fahrer vorgegebenen Betätigung über eine Betätigungsvorrichtung elektrisch anzusteuern. Eine zweite Steuereinheit ist vorgesehen, die dazu ausgebildet ist, das Parkbremsventil in Abhängigkeit der automatisiert angeforderten Fahrzeugsollverzögerung elektrisch zu steuern, wenn eine elektrische Ansteuerung des jeweiligen Steuerventils verhindert ist, zum Ausbilden einer elektronisch pneumatisch gesteuerten Redundanz. Weiterhin ist mindestens ein einem Steuerventil zugeordnetes Bypass-Ventil vorgesehen, das ausgebildet ist, das zugeordnete Steuerventil pneumatisch anzusteuern, wenn die pneumatische Ansteuerung in Abhängigkeit der automatisiert angeforderten Fahrzeugsollverzögerung oder in Abhängigkeit der von dem Fahrer vorgegebenen Betätigung der Betätigungsvorrichtung erfolgt, wenn eine elektrische Ansteuerung des jeweiligen Steuerventils verhindert ist, zum Erweitern der elektronisch pneumatisch gesteuerten Redundanz.

US2018334150A1 zeigt ein elektronisch hydraulikdrucksteuerbares Bremssystem und Verfahren zum Steuern eines elektronisch drucksteuerbaren Bremssystems. Jede Radbremse des Bremssystems ist jeweils mit mindestens zwei Bremskreisen verbunden, Pumpeneinheiten und Ventileinrichtungen eines Bremskreises sind jeweils unabhängig von den Pumpeneinheiten und Ventileinrichtungen des jeweils anderen Bremskreises betreibbar.

Ein Problem hierbei ist, dass alle diese Systeme primär auf eine Restverfügbarkeit bei Einfachfehlern abzielen, um das Fahrzeug in einen sicheren Zustand zu überführen. Sie eignen sich im Allgemeinen nicht, um das Fahrzeug bis zu seinem Ziel weiterfahren zu lassen.

Aufgabe der vorliegenden Erfindung ist es daher, mit möglichst geringem Aufwand für Einfachfehler im Bremssystem eine resultierende Restverfügbarkeit und Robustheit des Bremssystems bereitzustellen, die es ermöglicht, das Fahrzeug weiter zu fahren, vorzugsweise bis zu beispielsweise seiner ursprünglichen Destination oder alternativ zu einer Werkstatt. Diese Systeme sollen möglichst keine negativen Auswirkungen auf die Leistung und die Robustheit des Betriebsbremssystems haben.

Die Erfindung löst die Aufgabe bei einem elektronisch steuerbaren Bremssystem der eingangs genannten Art dadurch, dass es ein Redundanz-Subsystem aufweist, mit einem Vorderachs-Redundanzbremskreis, einem Hinterachs-Redundanzbremskreis und einem Redundanzbrems-Steuermodul, wobei den Vorderachs-Betriebsbremsen ein Vorderachs-Redundanzbremsdruck und den Hinterachs-Betriebsbremsen ein Hinterachs-Redundanzbremsdruck zuführbar ist und das Redundanzbrems-Steuermodul ausgebildet ist, in Abhängigkeit einer Bremsvorgabe ein Redundanzbrems-Steuersignal zu erzeugen, wobei der Vorderachs- und Hinterachs-Redundanzbremsdruck in Abhängigkeit des Redundanzbrems-Steuersignals erzeugt und an die Vorderachs- und Hinterachs-Betriebsbremsen vorgegeben werden kann zum von dem Redundanzbrems-Steuermodul elektrisch gesteuerten Umsetzen der Bremsvorgabe über den Vorderachs-Redundanzbremskreis und den Hinterachs-Redundanzbremskreis.

Der Erfindung , wie in dem beigefügten unabhängigen Anspruch 1 definiert, liegt die Erkenntnis zugrunde, dass die Restverfügbarkeit und Robustheit dadurch erhöht werden kann, dass parallel zum Betriebsbremssystem ein Redundanzbremssystem aufgebaut wird, welches bei Ausfall des Betriebsbrems-Subsystems übernehmen kann. Sowohl das Betriebsbrems-Subsystem als auch das Redundanzbrems-Subsystem wirken dabei auf dieselben Bremsaktuatoren, nämlich die Vorderachs-Betriebsbremsen und die Hinterachs-Betriebsbremsen. Das Redundanzbrems-Subsystem kann vollständig durch das Redundanzbrems-Steuermodul gesteuert werden, welches vorzugsweise unabhängig von sämtlichen Steuereinheiten des Betriebsbrems-Subsystems ist. Vorzugsweise ist das Redundanzbrems-Steuermodul dazu ausgebildet, kontinuierlich das Betriebsbrems-Subsystem zu überwachen und bei einem Fehler unmittelbar zu übernehmen. Das Redundanzbrems-Subsystem verfügt vorzugsweise über eigene Druckmodulatoren und ist dadurch in der Lage, eine radindividuelle Regelung zu erreichen und auch ABSund/oder ESC-Funktionen umzusetzen. Vorzugsweise wird ferner eine dritte Rückfallebene, wie sie beispielsweise im Stand der Technik bekannt ist, umgesetzt.

In einer ersten bevorzugten Ausführungsform sind der Hinterachs-Betriebsbremskreis und der Hinterachs-Redundanzbremskreis mit einem ersten Druckluftvorrat verbunden und der Vorderachs-Betriebsbremskreis und der Vorderachs-Redundanzbremskreis sind mit einem zweiten Druckluftvorrat verbunden. Das heißt, sowohl für den Betriebsbremskreis als auch für den Redundanzbremskreis sind separate Druckluftvorräte vorgesehen. Alternativ kann vorgesehen sein, dass der Hinterachs-Betriebsbremskreis und der Vorderachs-Redundanzbremskreis mit einem ersten Druckluftvorrat verbunden sind und der Vorderachs-Betriebsbremskreis und der Hinterachs-Redundanzbremskreis mit einem zweiten Druckluftvorrat verbunden sind. In dieser Variante sind die beiden Druckluftvorräte über Kreuz verbunden, sodass jeweils beide Druckluftvorräte, der erste Druckluftvorrat und der zweite Druckluftvorrat, sowohl im Betriebsfall als auch im Redundanzfall verwendet werden. Auf diese Weise kann insgesamt ein höheres Volumen bereitgestellt werden. Auch kann hierdurch eine Absicherung gegen Ausfall eines der Vorräte wenigstens rudimentär erzielt werden.

Vorzugsweise weist das elektronisch steuerbare Bremssystem ferner einen Parkbremskreis mit Federspeicherbremsen auf, wobei den Federspeicherbremsen ein Parkbrems-Bremsdruck zuführbar ist, wobei der Parkbrems-Bremsdruck in Abhängigkeit der Bremsvorgabe erzeugt und an die Federspeicherbremsen vorgegeben werden kann zum Umsetzen der Bremsvorgabe über den Parkbremskreis. Dieser Parkbremskreis ist vorzugsweise mit einem dritten Druckluftvorrat verbunden. Der Parkbremskreis kann in herkömmlicher Art und Weise ausgestaltet sein, und die über den Parkbremskreis umzusetzende Bremsvorgabe kann beispielsweise das Signal eines Parkbremsschalters, ein Signal einer übergeordneten Einheit zum Einlegen der Feststellbremsen oder ein Signal zum Verwenden der Feststellbremsen als Hilfsbremsen sein.

Um mittels der zwei verschiedenen Subsysteme auf dieselben Betriebsbremsen zuzugreifen, kann vorgesehen sein, dass der Vorderachs-Betriebsbremskreis und der Vorderachs-Redundanzbremskreis über erste und zweite Wechselventile mit den entsprechenden Vorderachs-Betriebsbremsen verbunden sind, derart, dass jeweils der höhere des Vorderachs-Betriebsbremsdrucks und des Vorderachs-Redundanzbremsdrucks an den Vorderachs-Betriebsbremsen ausgesteuert wird. In gleicher Weise können der Hinterachs-Betriebsbremskreis und der Hinterachs-Redundanzbremskreis über dritte und vierte Wechselventile mit den entsprechenden Hinterachs-Betriebsbremsen verbunden sein, derart, dass jeweils der höhere des Hinterachs-Betriebsbremsdrucks und des Hinterachs-Redundanzbremsdrucks an den Hinterachs-Betriebsbremsen ausgesteuert wird. Auf diese Weise kann das Redundanz-Subsystem den vom Betriebsbrems-Subsystem ausgesteuerten Druck übersteuern und eine sichere Bremsung ist auch bei Ausfall des Betriebsbrems-Subsystems möglich.

Alternativ hierzu kann vorgesehen sein, dass die Vorderachs-Betriebsbremsen einen Vorderachs-Betriebsbremszylinder und einen redundanten Vorderachs-Bremszylinder aufweisen, wobei der Vorderachs-Betriebsbremskreis mit dem Vorderachs-Betriebsbremszylinder und der Vorderachs-Redundanzbremskreis mit dem redundanten Vorderachs-Bremszylinder verbunden ist. In gleicher Weise kann auch für die Hinterachse vorgesehen sein, dass die Hinterachs-Betriebsbremsen einen Hinterachs-Betriebsbremszylinder und einen redundanten Hinterachs-Bremszylinder aufweisen, wobei der Hinterachs-Betriebsbremskreis mit dem Hinterachs-Betriebsbremszylinder und der Hinterachs-Redundanzbremskreis mit dem redundanten Hinterachs-Bremszylinder verbunden ist. In einem solchen Fall können die oben genannten Wechselventile entfallen. Allerdings sind in dieser Ausführungsform besondere Bremszylinder notwendig, die den Betriebsbremszylinder und den redundanten Bremszylinder umfassen.

Vorzugsweise ist vorgesehen, dass das Betriebsbrems-Steuermodul und das Redundanzbrems-Steuermodul über eine erste Statusleitung zum Übertragen eines ersten Statussignals miteinander verbunden sind und das Redundanzbrems-Steuermodul dazu eingerichtet ist, für den Fall, dass ein elektrisch gesteuertes Umsetzen der Bremsvorgabe über den Vorderachs-Betriebsbremskreis und/oder den Hinterachs-Betriebsbremskreis durch das Betriebsbrems-Steuermodul verhindert ist, ein erstes Fehlersignal von dem Betriebsbrems-Steuermodul über die erste Statusleitung zu empfangen und/oder dazu eingerichtet ist, für den Fall eines Ausbleibens des ersten Statussignals einen Fehler zu ermitteln. Das erste Statussignal kann ein übliches Signal des Betriebsbrems-Steuermoduls sein, welches von dem Redundanzbrems-Steuermodul empfangen wird und eine Funktionsfähigkeit des Betriebsbrems-Steuermoduls anzeigt. Beispiele hierfür können einfache Signale zum Schalten von einem oder mehreren Magnetventilen sein, die das Betriebsbrems-Steuermodul zum Umsetzen der Bremsvorgabe ausgibt. Sollte ein Umsetzen der Bremsvorgabe durch das Betriebsbrems-Steuermodul nicht möglich sein, ist es denkbar, dass dieses ein Fehlersignal ausgibt. Ein solches Fehlersignal wird gemäß dieser Ausführungsform dann über die erste Statusleitung bereitgestellt, sodass das Redundanzbrems-Steuermodul übernehmen kann. Auch kann ein Ausbleiben des ersten Statussignals als Fehler interpretiert werden, der von dem Redundanzbrems-Steuermodul ermittelt wird, sodass dieses übernimmt. Vorzugsweise ist das Redundanzbrems-Steuermodul dazu eingerichtet, das Erkennen eines Fehlers des Betriebsbrems-Steuermoduls über einen weiteren Kommunikationspfad, zum Beispiel einen Fahrzeugbus, zu verifizieren und/oder plausibilisieren.

Vorzugsweise ist das Betriebsbrems-Steuermodul über einen ersten Fahrzeugbus mit einer Einheit für autonomes Fahren und das Redundanzbrems-Steuermodul über einen zweiten Fahrzeugbus mit der Einheit für autonomes Fahren zum Empfangen der Bremsvorgabe verbunden. Im normalen Betrieb empfangen also beide, sowohl das Betriebsbrems-Steuermodul als auch das Redundanzbrems-Steuermodul, die Bremsvorgabe von der Einheit für autonomes Fahren, sodass das Redundanzbrems-Steuermodul unmittelbar bei einem Fehler des Betriebsbrems-Steuermoduls übernehmen kann. Es kann aber auch vorgesehen sein, dass die Einheit für autonomes Fahren nur dann die Bremsvorgabe an das Redundanzbrems-Steuermodul übergibt, wenn dieses bereits übernommen hat.

Ferner weist das elektronisch steuerbare Bremssystem vorzugsweise einen Bremswertgeber zum Bereitstellen einer manuellen Bremsvorgabe auf, wobei der Bremswertgeber durch eine erste Bremswertgeberleitung mit dem Betriebsbrems-Steuermodul und durch eine zweite Bremswertgeberleitung mit dem Redundanzbrems-Steuermodul verbunden ist. Auf diese Weise kann das Redundanzbrems-Steuermodul unabhängig von der Funktion des Betriebsbrems-Steuermoduls Signale vom Bremswertgeber empfangen und umsetzen, sofern das Redundanzbrems-Steuermodul die Steuerung übernommen hat. Die ersten und zweiten Bremswertgeberleitungen sind vorzugsweise elektrische Bremswertgeberleitungen. Zusätzlich können auch pneumatische Leitungen vorgesehen sein.

Ferner ist bevorzugt, dass das Betriebsbrems-Subsystem einen mit dem Betriebsbrems-Steuermodul verbundenen Betriebs-Vorderachsmodulator und einen Betriebs-Hinterachsmodulator aufweist, die dazu ausgebildet sind, das Betriebsbrems-Steuersignal zu empfangen und den Vorderachs- bzw. Hinterachs-Betriebsbremsdruck auszusteuern. Vorzugsweise weist das Redundanzbrems-Subsystem einen mit dem Redundanzbrems-Steuermodul verbundenen Redundanz-Vorderachsmodulator und einen Redundanz-Hinterachsmodulator auf, die dazu ausgebildet sind, das Redundanzbrems-Steuersignal zu empfangen und den Vorderachs- bzw. Hinterachs-Redundanzbremsdruck auszusteuern. Neben den redundanten Steuermodulen weist das Bremssystem gemäß der vorliegenden Ausführungsform also auch redundante Achsmodulatoren auf, die dann zum Einsatz kommen, wenn das Redundanzbrems-Subsystem das Betriebsbrems-Subsystem ersetzen soll. Es können mit diesem System also nicht nur Fehler in dem Betriebsbrems-Steuermodul ausgeglichen werden, sondern auch Fehler in dem Betriebs-Vorderachsmodulator oder dem Betriebs-Hinterachsmodulator. Die Restverfügbarkeit und Robustheit des Bremssystems sind hierdurch weiter erhöht.

In einer solchen Ausführungsform kann ferner vorgesehen sein, dass das Betriebsbrems-Subsystem erste und zweite ABS-Ventile aufweist, die jeweils zwischen dem Betriebsbrems-Vorderachsmodulator und der entsprechenden Vorderachs-Betriebsbremse angeordnet sind. Auch das Redundanzbrems-Subsystem weist vorzugsweise erste und zweite redundante ABS-Ventile auf, die jeweils zwischen dem Redundanz-Vorderachsmodulator und der entsprechenden Vorderachs-Betriebsbremse angeordnet sind. Darüber hinaus kann in Ausführungsformen vorgesehen sein, dass das Redundanzbrems-Subsystem dritte und vierte redundante ABS-Ventile für den Hinterachs-Redundanzbremskreis aufweist. Auf diese Weise lässt sich auch eine radindividuelle ABS-Funktion dann umsetzen, wenn das Betriebsbrems-Subsystem ausgefallen ist und das Redundanzbrems-Subsystem übernimmt. Die Robustheit ist weiter erhöht.

In Ausführungsformen, in denen das elektronisch steuerbare Bremssystem einen Parkbremskreis aufweist, weist dieses vorzugsweise ferner ein Parkbremsmodul auf, das zum Steuern des Parkbremskreises ausgebildet ist, wobei das Parkbremsmodul in Abhängigkeit von einem Empfang einer Parkbrems-Bremsvorgabe den Parkbremsdruck aussteuert. Das Parkbremsmodul ist also ein separates Modul, das unabhängig von dem Betriebsbrems-Steuermodul und dem Redundanzbrems-Steuermodul vorgesehen ist. Es verfügt vorzugsweise über eine eigene Intelligenz und eine separate Stromversorgung.

Vorzugsweise sind das Betriebsbrems-Steuermodul und das Parkbremsmodul über eine zweite Statusleitung miteinander verbunden und das Parkbremsmodul ist dazu eingerichtet, im Fehlerfall ein zweites Fehlersignal von dem Betriebsbrems-Steuermodul über die zweite Statusleitung zu empfangen und/oder ist dazu eingerichtet, für den Fall eines Ausbleibens des ersten Statussignals einen Fehler zu ermitteln. Ferner ist das Parkbremsmodul vorzugsweise dazu ausgebildet, in Abhängigkeit vom Empfang des zweiten Fehlersignals oder des Ausbleibens des ersten Statussignals einen redundanten Steuerdruck für den Vorderachs-Betriebsbremskreis und/oder den Vorderachs-Redundanzbremskreis bereitzustellen. Vorzugsweise wird der redundante Steuerdruck an dem Betriebs-Vorderachsmodulator oder dem Redundanz-Vorderachsmodulator ausgesteuert. Hierdurch wird eine dritte Rückfallebene gebildet, bei der vorzugsweise das Parkbremsmodul die Steuerung übernimmt. Sollten sowohl das Betriebsbrems-Steuermodul als auch das Redundanzbrems-Steuermodul ausfallen, wird in dieser dritten Rückfallebene die Steuerung des Bremssystems über das Parkbremsmodul realisiert. Hierzu steuert das Parkbremsmodul einerseits die Federspeicherbremsen an der Hinterachse an, um diese als redundante Betriebsbremsen einzusetzen. Andererseits wird gleichzeitig der Steuerdruck für die Vorderachse ausgegeben und je nach Fehlerfall entweder dem Betriebs-Vorderachsmodulator oder dem Redundanz-Vorderachsmodulator bereitgestellt. Der redundante Steuerdruck basiert vorzugsweise auf dem inversen Parkbremsdruck, also dem Druck, der von dem Parkbremsmodul an den Federspeicherbremsen bereitgestellt wird. Auch eine weitere Modulation dieses Drucks ist denkbar.

Um diese Funktionalität umzusetzen, weist das Parkbremsmodul vorzugsweise ein Inverter-Steuerventil mit einem Redundanzausgang auf, wobei das InverterSteuerventil ausgebildet ist, einen redundanten Steuerdruck zu erzeugen und über den Redundanzausgang auszugeben, wobei der redundante Steuerdruck umgekehrt proportional zu dem Parkbrems-Bremsdruck ist, wobei der Vorderachs-Betriebsbremsdruck in Abhängigkeit des von dem Inverter-Steuerventil vorgegebenen redundanten Steuerdrucks an die Vorderachs-Betriebsbremsen des Vorderachs-Betriebsbremskreises aussteuerbar ist, falls ein durch das Redundanzbrems-Steuermodul elektrisch gesteuertes Umsetzen der Bremsvorgabe über den Vorderachs-Betriebsbremskreis und/oder den Vorderachs-Redundanzbremskreis verhindert ist. Hierdurch kann der Vorteil erreicht werden, dass bei einem elektrischen Ausfall in beiden Subsystemen, dem Betriebsbrems-Subsystems und des Redundanzbrems-Systemsubsystems, infolgedessen weder der Betriebsbrems-Bremsdruck noch der Redundanzbrems-Bremsdruck in Abhängigkeit eines elektrisch vorgebbaren Betriebsbrems-Steuersignals festgelegt bzw. eine elektrisch gesteuerte Umsetzung einer bestimmten Bremsvorgabe durch das Betriebsbrems-Subsystem oder das Redundanzbrems-Subsystem nicht mehr stattfinden kann, eine dem Parkbremskreis vorgegebene Bremsvorgabe über das Inverter-Steuerventil an den Vorderachs-Betriebsbremskreis umgeleitet werden kann. Bei einem elektrischen Ausfall des Betriebsbrems-Subsystems und des Redundanzbrems-Subsystems wird die dem Parkbremskreis vorgegebene Bremsvorgabe hierbei nicht gezwungenermaßen auch von den Federspeicherbremsen im Parkbremskreis umgesetzt. Es kann beispielsweise auch vorgesehen sein, dass bei einem derartigen elektrischen Ausfall lediglich der Parkbrems-Bremsdruck und/oder der Parkbrems-Steuerdruck und/oder ein damit zusammenhängender Steuerdruck im Parkbremskreis erzeugt wird, eine Übertragung bzw. Umsetzung dieser Drücke über die Federspeicherbremsen aber verhindert wird und diese Drücke lediglich über das Inverter-Steuerventil an den Vorderachs-Betriebsbremskreis oder den Vorderachs-Redundanzbremskreis umgeleitet werden, um die dem Parkbremskreis vorgegebene Bremsvorgabe in dem Vorderachs-Betriebsbremskreis oder Vorderachs-Redundanzbremskreis umsetzen zu können und den elektrischen Ausfall in dem Betriebsbrems-Subsystem oder Redundanzbrems-Subsystem somit in einfacher Weise zu kompensieren.

Weiterhin weist das elektronisch steuerbare Bremssystem vorzugsweise ein Anhängersteuermodul auf, das zum Aussteuern eines Anhängerbremsdrucks vorgesehen ist. Das Anhängersteuermodul kann mit dem Parkbremsmodul integriert sein, insbesondere ein gemeinsames Gehäuse und insbesondere eine gemeinsame Steuerung aufweisen.

In einer bevorzugten Ausgestaltung ist vorgesehen, dass das Betriebsbrems-Steuermodul und das Anhängersteuermodul über eine zweite Statusleitung miteinander verbunden sind und das Anhängersteuermodul dazu eingerichtet ist, im Fehlerfall ein zweites Fehlersignal von dem Betriebsbrems-Steuermodul über die zweite Statusleitung zu empfangen und/oder dazu eingerichtet ist, für den Fall eines Ausbleibens des zweiten Statussignals einen Fehler zu ermitteln. Ferner ist das Anhängersteuermodul vorzugsweise dazu ausgebildet, in Abhängigkeit vom Empfang des zweiten Fehlersignals und/oder des Ausbleibens des zweiten Statussignals einen redundanten Steuerdruck für den Vorderachs-Betriebsbremskreis und/oder den Vorderachs-Redundanzbremskreis bereitzustellen. In diesem Fall übernimmt also das Anhängersteuermodul die Aussteuerung des redundanten Steuerdrucks und somit die redundante Aussteuerung der Bremsdrücke an der Vorderachse. Hier gelten vorzugsweise dieselben Ausführungen, die oben in Bezug auf das Parkbremsmodul getroffen wurden. Je nach Gestaltung des Bremssystems kann es vorteilhaft sein, diese Funktionalität entweder dem Parkbremsmodul oder dem Anhängersteuermodul oder einem gemeinsamen kombinierten Modul zuzuordnen.

In einer solchen Ausführungsform ist vorzugsweise vorgesehen, dass das Anhängersteuermodul mit einer Anhänger-Redundanzdruckleitung verbunden ist, in die der jeweils höhere des Vorderachs-Betriebsbremsdrucks und des Vorderachs-Redundanzbremsdrucks als Anhängerredundanzdruck ausgesteuert wird, wobei das Anhängersteuermodul dazu ausgebildet ist, in Abhängigkeit des Empfangs des zweiten Fehlersignals und/oder bei Ausbleiben des zweiten Statussignals den Anhängerredundanzdruck als Anhängerbremsdruck auszusteuern. Auf diese Weise kann der Anhänger ebenfalls redundant, in diesem Fall vorzugsweise pneumatisch redundant, mit eingebremst werden, für den Fall, dass eine elektronische Aussteuerung nicht möglich ist. Die Restverfügbarkeit und die Robustheit sind weiter erhöht.

Vorzugsweise weist das Bremssystem weiterhin eine erste Stromquelle, eine zweite Stromquelle und eine dritte Stromquelle auf, wobei die erste Stromquelle mit dem Betriebsbrems-Steuermodul, die zweite Stromquelle mit dem Redundanzbrems-Steuermodul und die dritte Stromquelle mit dem Parkbremsmodul und/oder dem Anhängersteuermodul verbunden ist. Auf diese Weise wird sichergestellt, dass jede Redundanzebene, nämlich einmal das Betriebsbrems-Subsystem, das Redundanzbrems-Subsystem und das Parkbremsmodul bzw. Anhängersteuermodul mit einer eigenen Stromversorgung verbunden ist. Auch hierdurch wird die Restverfügbarkeit und die Robustheit weiter erhöht.

In einem weiteren Aspekt löst die Erfindung die eingangs genannte Aufgabe bei einem Fahrzeug, insbesondere Nutzfahrzeug, durch ein elektronisch steuerbares Bremssystem nach einer der vorstehend beschriebenen bevorzugten Ausführungsformen eines elektronisch steuerbaren Bremssystems gemäß dem ersten Aspekt der Erfindung.

In einem dritten Aspekt der Erfindung wird die eingangs genannte Aufgabe gelöst durch ein Verfahren zum Steuern eines elektronisch steuerbaren Bremssystems nach einer der vorstehend beschriebenen bevorzugten Ausführungsformen eines elektronisch steuerbaren Bremssystems gemäß ersten Aspekt der Erfindung, mit den Schritten: Feststellen, ob die Bremsvorgabe über den Vorderachs-Betriebsbremskreis und/oder den Hinterachs-Betriebsbremskreis elektrisch gesteuert durch das Betriebsbrems-Steuermodul umgesetzt werden kann; falls ein durch das Betriebsbrems-Steuermodul elektrisch gesteuertes Umsetzen der Bremsvorgabe über den Vorderachs-Betriebsbremskreis und/oder den Hinterachs-Betriebsbremskreis verhindert ist: Feststellen, ob die Bremsvorgabe über den Vorderachs-Redundanzbremskreis und/oder den Hinterachs-Redundanzbremskreis elektrisch gesteuert durch das Redundanzbrems-Steuermodul umgesetzt werden kann und falls ein durch das Redundanzbrems-Steuermodul elektrisch gesteuertes Umsetzen der Bremsvorgabe über den Vorderachs-Redundanzbremskreis und/oder den Hinterachs-Redundanzbremskreis nicht verhindert ist: Aussteuern des Vorderachs- und Hinterachs-Redundanzbremsdrucks in Abhängigkeit des vom Redundanzbrems-Steuermodul erzeugten Redundanzbrems-Steuersignals an den Vorderachs- und Hinterachs-Betriebsbremsen zum von dem Redundanzbrems-Steuermodul elektrisch gesteuerten Umsetzen der Bremsvorgabe über den Vorderachs-Redundanzbremskreis und den Hinterachs-Redundanzbremskreis. Es soll verstanden werden, dass das elektronisch steuerbare Bremssystem gemäß dem ersten Aspekt der Erfindung und das Verfahren zum Steuern eines elektronisch steuerbaren Bremssystems gemäß dem zweiten Aspekt der Erfindung gleiche oder ähnliche Unteraspekte haben, wie sie insbesondere in den abhängigen Ansprüchen niedergelegt sind. Insofern wird für bevorzugte Ausführungsformen und deren Vorteile vollumfänglich auf die obige Beschreibung verwiesen.

In einer bevorzugten Weiterbildung des Verfahrens weist dieses die Schritte auf: Bereitstellen eines ersten Statussignals durch das Betriebsbrems-Steuermodul an dem Redundanzbrems-Steuermodul; und für den Fall, dass ein elektrisch gesteuertes Umsetzen der Bremsvorgabe über den Vorderachs-Betriebsbremskreis und/oder den Hinterachs-Betriebsbremskreis durch das Betriebsbrems-Steuermodul verhindert ist: Bereitstellen eines ersten Fehlersignals durch das Betriebsbrems-Steuermodul und Empfangen des ersten Fehlersignals an dem Redundanzbrems-Steuermodul; und/oder Ermitteln eines Fehlers des Betriebsbrems-Steuermoduls für den Fall eines Ausbleibens des ersten Statussignals. Das Statussignal kann ein übliches Signal, das in der Verarbeitung der Bremsvorgabe in dem Betriebsbrems-Steuermodul erzeugt wird, sein. Das Redundanzbrems-Steuermodul überwacht das Betriebsbrems-Steuermodul und empfängt dazu das erste Statussignal. Das erste Statussignal kann regelmäßig ausgegeben werden, beispielsweise vor bestimmten Intervallen oder bei bestimmten Operationen. Wenn eine elektrisch gesteuerte Umsetzung der Bremsvorgabe über den Vorderachs-Betriebsbremskreis und/oder den Hinterachs-Betriebsbremskreis durch das Betriebsbrems-Steuermodul verhindert ist, beispielsweise, weil das Betriebsbrems-Steuermodul einen Fehler hat, stellt dies in einer Variante ein Fehlersignal bereit, welches dann von dem Redundanzbrems-Steuermodul empfangen wird. Sollte das Betriebsbrems-Steuermodul direkt ausfallen, beispielsweise, weil der Fehler einen Ausfall der Stromversorgung darstellt, bleibt das erste Statussignal in einer anderen Variante in der Regel aus. Durch das Ausbleiben des ersten Statussignals ermittelt gemäß dieser Ausführungsform das Redundanzbrems-Steuermodul einen Fehler des Betriebsbrems-Steuermoduls aufgrund des Ausbleibens des Statussignals.

In beiden Fällen oder auch unabhängig davon ist bevorzugt, dass eine Assistenzbremsvorgabe an dem Betriebsbrems-Steuermodul über einen ersten Fahrzeug-BUS von der Einheit für autonomes Fahren empfangen wird und die Assistenzbremsvorgabe an dem Redundanzbrems-Steuermodul über einen zweiten Fahrzeug-BUS von der Einheit für autonomes Fahren empfangen wird. Beide Module, das Betriebsbrems-Steuermodul und das Redundanzbrems-Steuermodul empfangen also die Assistenzbremsvorgabe und können diese umsetzen. Wird nun ein Fehler wie oben beschrieben festgestellt, übernimmt vorzugsweise das Redundanzbrems-Steuermodul und setzt die Assistenzbremsvorgabe um.

Weiterhin ist bevorzugt, dass das Verfahren umfasst: Empfangen einer Parkbremsvorgabe an dem Parkbremsmodul und Aussteuern eines Parkbremsdrucks, vorzugsweise mittels des Parkbremsmoduls. Für den Fall, dass ein elektrisch gesteuertes Umsetzen der Bremsvorgabe über den Vorderachs-Betriebsbremskreis und/oder den Hinterachs-Betriebsbremskreis durch das Betriebsbrems-Steuermodul verhindert ist: Bereitstellen des zweiten Fehlersignals durch das Betriebsbrems-Steuermodul an dem Parkbremsmodul und/oder Ermitteln eines Fehlers des Betriebsbrems-Steuermoduls für den Fall eines Ausbleibens des zweiten Statussignals; und Aussteuern eines redundanten Steuerdrucks für den Vorderachs-Betriebsbremskreis und/oder den Vorderachs-Redundanzbremskreis durch das Parkbremsmodul in Abhängigkeit vom Empfang des zweiten Fehlersignals oder des ermittelten Fehlers durch das Parkbremsmodul. Es kann auch vorgesehen sein, dass das zweite Statussignal und das zweite Fehlersignal von dem Redundanzbrems-Steuermodul bereitgestellt wird und insofern das Parkbremsmodul mit dem Redundanzbrems-Steuermodul verbunden ist. Das zweite Statussignal und das zweite Fehlersignal würden in diesem Fall nur dann ausgegeben werden, wenn das Redundanzbrems-Steuermodul bereits übernommen hat und das Bremssystem somit in der zweiten Ebene, das heißt der ersten Redundanzebene, arbeitet.

In einer Variante kann auch das Anhängersteuermodul diese Funktionalität übernehmen.

Vorzugsweise umfasst das Verfahren ferner die Schritte: Empfangen des jeweils höheren des Vorderachs-Betriebsbremsdrucks und des Vorderachs-Redundanzbremsdrucks als Anhängerredundanzdruck über eine Anhängerredundanzdruckleitung an dem Anhängersteuermodul; und Aussteuern des Anhängerredundanzdrucks als Anhängerbremsdruck. Auf diese Weise ist es möglich, dass auch der Anhänger redundant mit eingebremst wird, falls ein Fehler in dem Bremssystem vorliegt, der ein reguläres Aussteuern des Anhängerbremsdrucks verhindert.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: ein erstes Ausführungsbeispiel eines elektronisch steuerbaren Bremssystems;
- Fig. 2: ein zweites Ausführungsbeispiel eines elektronisch steuerbaren Bremssystems;
- Fig. 3: ein drittes Ausführungsbeispiel eines elektronisch steuerbaren Bremssystems;
- Fig. 4: ein viertes Ausführungsbeispiel eines elektronisch steuerbaren Bremssystems;
- Fig. 5: ein fünftes Ausführungsbeispiel eines elektronisch steuerbaren Bremssystems;
- Fig. 6: einen Querschnitt durch Betriebsbremsen gemäß einem Ausführungsbeispiel; und
- Fig. 7: ein sechstes Ausführungsbeispiel eines elektronisch steuerbaren Bremssystems.

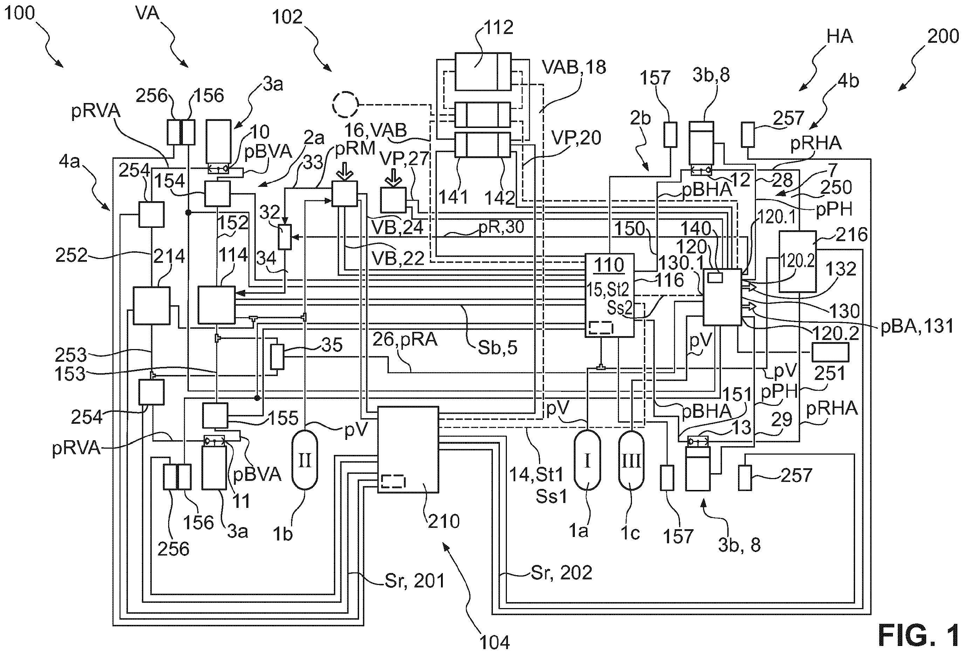

Fig. 1 zeigt zunächst ein erstes Ausführungsbeispiel eines elektronisch steuerbaren Bremssystems 100 für ein Fahrzeug 200, insbesondere ein Nutzfahrzeug 200. Das Bremssystem 100 weist ein Betriebsbrems-Subsystem 102 und ein Redundanzbrems-Subsystem 104 auf, welches das Betriebsbrems-Subsystem 102 im Falle eines Fehlers desselben ersetzen kann.

Das Bremssystem 100 weist einen ersten Druckluftvorrat 1a, einen zweiten Druckluftvorrat 1b und einen dritten Druckluftvorrat 1c auf. Ein Vorderachs-Betriebsbremskreis 2a wird durch den zweiten Druckluftvorrat 1b gespeist. Ein Hinterachs-Betriebsbremskreis 2b für die Hinterachse HA des Fahrzeugs 200 wird durch den ersten Druckluftvorrat 1a gespeist. Dem Vorderachs-Betriebsbremskreis 2a sind Vorderachs-Betriebsbremsen 3a zugeordnet und dem Hinterachs-Betriebsbremskreis 2b sind Hinterachs-Betriebsbremsen 3b zugeordnet. Darüber hinaus weist das Bremssystem 100 einen Vorderachs-Redundanzbremskreis 4a auf, der in diesem Ausführungsbeispiel ebenso wie der Vorderachs-Betriebsbremskreis 2a durch den zweiten Druckluftvorrat 1b gespeist wird. In übereinstimmender Weise weist das Bremssystem 100 einen Hinterachs-Redundanzbremskreis 4b auf, der in diesem Ausführungsbeispiel durch den ersten Druckluftvorrat 1a gespeist wird. Der dritte Druckluftvorrat 1c ist einem Parkbremskreis 7 zugeordnet, der auf Federspeicherbremsen 8 an der Hinterachse HA einwirkt, die hier mit den Hinterachs-Betriebsbremsen 3b integriert sind. Der Parkbremskreis 7 wird weiter unten genauer beschrieben werden.

Zum Steuern des Bremssystems 100 weist dieses zunächst ein Betriebsbrems-Steuermodul 110 auf, welches über einen ersten Fahrzeug-BUS 16 mit einer Einheit für autonomes Fahren 112 verbunden ist und so über den ersten Fahrzeug-BUS 16 eine Bremsvorgabe, genauer gesagt eine AssistenzBremsvorgabe VAB erhält. Das Betriebsbrems-Steuermodul 110 setzt diese Bremsvorgabe VAB um und sendet hierzu ein Betriebsbrems-Steuersignal SB über eine erste elektrische Leitung 5 an einen Betriebs-Vorderachsmodulator 114. In gleicher Weise empfängt auch ein Betriebs-Hinterachsmodulator 116, der in diesem Ausführungsbeispiel mit dem Betriebsbrems-Steuermodul 110 integriert ist, das Betriebsbrems-Steuersignal SB. Der Betriebs-Hinterachsmodulator 116 empfängt Vorratsdruck pV aus dem ersten Druckluftvorrat 1a und steuert entsprechende Hinterachs-Betriebsbremsdrücke pBHA an die Hinterachs-Betriebsbremsen 3b aus. Dazu ist der Betriebs-Hinterachsmodulator 116 über erste und zweite Hinterachs-Betriebsbremsdruckleitungen 150, 151 mit den entsprechenden Hinterachs-Betriebsbremsen 3b verbunden. In entsprechender Weise empfängt der Betriebs-Vorderachsmodulator 114 Vorratsdruck pV von dem zweiten Druckluftvorrat 1b und steuert Vorderachs-Betriebsbremsdrücke pBVA über erste und zweite Vorderachs-Betriebsbremsleitungen 152, 153 sowie erste und zweite Vorderachs-ABS-Module 154, 155 an die entsprechenden Vorderachs-Betriebsbremsen 3a aus. Genauer gesagt, sind die ersten und zweiten Vorderachs-Betriebsbremsleitungen 152, 153 mit ersten und zweiten Wechselventilen 10, 11 verbunden, die den Vorderachs-Betriebsbremsen 3a vorgeschaltet sind. In ähnlicher Weise sind auch den Hinterachs-Betriebsbremsen 3b dritte und vierte Wechselventile 12, 13 vorgeschaltet, sodass die ersten und zweiten Hinterachs-Betriebsbremsleitungen 150, 151 mit diesen dritten und vierten Wechselventilen 12, 13 verbunden sind.

Das Bremssystem 100 umfasst ferner einen Bremswertgeber BST, der einerseits mit dem Betriebsbrems-Subsystem 102 und andererseits mit dem Redundanzbrems-Subsystem 104 verbunden ist. Zunächst ist der Bremswertgeber BST über eine erste Bremswertgeberleitung 22, die doppeladrig ausgebildet ist, mit dem Betriebsbrems-Steuermodul 110 verbunden und stellt an diesem eine Bremsvorgabe, nämlich eine Betriebs-Bremsvorgabe VB bereit, die über den Bremswertgeber BST beispielsweise manuell ausgesteuert werden kann. Auch basierend auf dieser Bremsvorgabe VB kann das Betriebsbremssignal SB bereitgestellt werden. Das Betriebsbrems-Steuermodul 110 ist mit einer ersten Stromquelle 141 verbunden.

Das Redundanzbrems-Subsystem 104 weist ein Redundanzbrems-Steuermodul 210 auf, das im Wesentlichen die gleichen Funktionen übernehmen kann wie das Betriebsbrems-Steuermodul 110. Das Redundanzbrems-Steuermodul 210 ist über einen zweiten Fahrzeug-BUS 118 mit der Einheit für autonomes Fahren 112 verbunden und empfängt von dieser eine Bremsvorgabe, nämlich die Assistenz-Bremsvorgabe VAB. Es kann vorgesehen sein, dass das Redundanzbrems-Steuermodul 210 die Assistenz-Bremsvorgabe VAB nur dann empfängt, wenn das Redundanzbrems-Steuermodul 210 aktiv ist. Ferner ist das Redundanzbrems-Steuermodul 210 mit dem Bremswertgeber BST verbunden, nämlich über eine zweite Bremswertgeberleitung 24, die ebenfalls doppeladrig ausgebildet ist, und empfängt somit die Betriebsbremsvorgabe VB. Um das Redundanzbrems-Steuermodul 210 mit Strom zu versorgen, ist dieses mit einer zweiten Stromquelle 142 verbunden.

Das Redundanzbrems-Subsystem 104 weist ferner in diesem Ausführungsbeispiel einen Redundanz-Vorderachsmodulator 214 und einen Redundanz-Hinterachsmodulator 216 auf. Der Redundanz-Vorderachsmodulator 214 ist über eine zweite elektrische Leitung 201 mit dem Redundanzbrems-Steuermodul 210 verbunden und empfängt von diesem ein Redundanzbrems-Steuersignal SR. In ähnlicher Weise ist der Redundanz-Hinterachsmodulator 216 über eine dritte elektrische Leitung 202 mit dem Redundanzbrems-Steuermodul 210 verbunden und empfängt von diesem ebenfalls das Redundanzbrems-Steuersignal SR. Weiterhin ist der Redundanz-Vorderachsmodulator 214 mit dem zweiten Druckluftvorrat 1b verbunden und empfängt Vorratsdruck pV von diesem. Der Redundanz-Hinterachsmodulator ist in ähnlicher Weise mit dem ersten Druckluftvorrat 1a verbunden und empfängt von diesem Vorratsdruck pV.

Der Redundanz-Vorderachsmodulator 214 ist über erste und zweite Vorderachs-Redundanzbremsleitungen 252, 253 und erste und zweite redundante Vorderachs-ABS-Module 254, 255 mit den ersten und zweiten Wechselventilen 10, 11 verbunden. Der Redundanz-Vorderachsmodulator 214 stellt hierüber einen Vorderachs-Redundanzbremsdruck pRVA an den ersten und zweiten Wechselventilen 10, 11 bereit. Die ersten und zweiten Wechselventile 10, 11 sind so ausgelegt, dass jeweils der höhere des Vorderachs-Betriebsbremsdrucks pBVA und Vorderachs-Redundanzbremsdrucks pRVA an die Vorderachs-Betriebsbremsen 3a weitergeleitet wird.

In ähnlicher Weise ist der Redundanz-Hinterachsmodulator 216 über erste und zweite Hinterachs-Redundanzbremsleitungen 250, 251 mit den dritten und vierten Wechselventilen 12, 13 verbunden und stellt an diesen den Hinterachs-Redundanzbremsdruck pRHA bereit. Auch die dritten und vierten Wechselventile 12, 13 sind so ausgelegt, dass jeweils der höhere des Hinterachs-Betriebsbremsdrucks pBHA und Hinterachs-Redundanzbremsdrucks pRHA an die Hinterachs-Betriebsbremsen 3b weitergeleitet wird.

Zum Überwachen des Betriebsbrems-Steuermoduls 116 ist das Redundanzbrems-Steuermodul 210 über eine erste Statusleitung 14 mit dem Betriebsbrems-Steuermodul 110 verbunden. Das Redundanzbrems-Steuermodul 210 empfängt über diese erste Statusleitung 14 ein erstes Statussignal SS1 vom Betriebsbrems-Steuermodul 110, welche einen normalen Betrieb des Betriebsbrems-Steuermoduls 110 anzeigen. Ein solches erstes Statussignal SS1 kann beispielsweise ein dafür vorgesehenes Signal sein, welches in gewissen Zeitabständen ausgegeben wird. Es kann auch ein übliches Signal sein, das von dem Betriebsbrems-Steuermodul 110 ausgesteuert wird, beispielsweise um Magnetventile des Betriebsbrems-Steuermoduls 110 zu schalten. Es kann auch ein von dem Betriebsbremssignal SB abgeleitetes Signal sein.

Für den Fall, dass das Betriebsbrems-Subsystem 102 einen Fehler hat, beispielsweise im Betriebsbrems-Steuermodul 110, kann vorgesehen sein, dass das Betriebsbrems-Steuermodul 110 ein erstes Fehlersignal ST1 über die erste Statusleitung 14 bereitstellt. Es kann auch vorgesehen sein, dass das Redundanzbrems-Steuermodul 210 selbst diesen Fehler ermittelt, wenn das erste Statussignal SS1 für einen vorbestimmten Zeitraum nicht mehr oder nicht richtig empfangen wird. Für diesen Fall übernimmt das Redundanzbrems-Steuermodul 210 vorzugsweise die Steuerung des Bremssystems 100, nämlich über das Redundanzbrems-Subsystem 104. Das Bremssystem 100 arbeitet dann in der ersten Redundanzebene, die die zweite Ebene des Bremssystems 100 ist. Das Betriebsbrems-Steuermodul 210 steuert das Redundanzbrems-Steuersignal SR aus und in der Folge werden über die Redundanz-Vorderachs- und Hinterachsmodulatoren 214, 216 die Redundanz-Vorder- und Hinterachs-Bremsdrücke pRVA, pRHA ausgesteuert. Über die ersten, zweiten, dritten und vierten Wechselventile 10, 11, 12, 13 können diese dann den entsprechenden Vorder- und Hinterachs-Betriebsbremsen 3a, 3b bereitgestellt werden.

Um die Robustheit weiter zu steigern, weist das Redundanzbrems-Subsystem 102 in diesem Ausführungsbeispiel (Fig. 1) redundante Vorderachs-Radsensoren 256 und redundante Hinterachs-Radsensoren 257 auf, die jeweils mit dem Redundanzbrems-Steuermodul 210 verbunden sind. Diese redundanten Radsensoren 256, 257 messen beispielsweise Drehzahl und/oder Verschleiß an den entsprechenden Rädern der Vorderachse VA und Hinterachse HA und ersetzen Radsensoren 156, 157 des Betriebsbrems-Subsystems 102. Das Redundanzbrems-Subsystem 104 ist in diesem Ausführungsbeispiel also ein vollständig redundantes Bremssystem, mit dem eine vollwertige redundante Ansteuerung der Vorder- und Hinterachsen VA/HA möglich ist.

Das Bremssystem 100 weist ferner in dem Parkbremskreis 7 ein Parkbremsmodul 120 auf. Das Parkbremsmodul 120 ist mit dem dritten Druckluftvorrat 1c verbunden und empfängt Vorratsdruck pV von diesem. Das Parkbremsmodul 120 ist einerseits über einen dritten Fahrzeug-BUS 20 mit der Einheit für autonomes Fahren 120 verbunden und empfängt von dieser eine Bremsvorgabe VP, nämlich eine Parkbrems-Bremsvorgabe VP. Alternativ oder zusätzlich kann das Parkbremsmodul 120 die Parkbrems-Bremsvorgabe VP auch von einem Parkbremsschalter HCU empfangen, mit dem das Parkbremsmodul 120 über eine Parkbremsschalterleitung 27 verbunden ist. Das Parkbremsmodul 120 weist ferner zwei Parkbremsanschlüsse 120.2 auf, an die Federspeicherbremsdruckleitungen 28, 29 angeschlossen sind, die mit Federspeicherbremsen 8 an der Hinterachse HA verbunden sind. Über die Federspeicheranschlüsse 120.2 kann das Parkbremsmodul 120 einen Parkbremsdruck pPH aussteuern. Das Parkbremsmodul 120 ist ebenso wie das Redundanzbrems-Steuermodul 210 mit der zweiten Stromquelle 142 verbunden.

Das Parkbremsmodul 120 weist ferner einen Redundanzausgang 120.1 auf, an den eine erste Redundanzdruckleitung 30 angeschlossen ist. In diese erste Redundanzdruckleitung 30 kann von dem Parkbremsmodul 120 ein Redundanzdruck pR ausgesteuert werden, zum redundanten Aussteuern der Vorderachs-Betriebsbremsdrücke pBVA und/oder Vorderachs-Redundanzbremsdrücke pRVA. Über das Parkbremsmodul 120 kann also in der Ausführungsform (Fig. 1) eine zweite Redundanzebene erzeugt werden, für den Fall, dass das Betriebsbrems-Steuermodul 110 und/oder das Redundanzbrems-Steuermodul 210 ausfallen. Zu diesem Zweck führt die erste Redundanzdruckleitung 30 zum Betriebs-Vorderachsmodulator 114, in diesem Ausführungsbeispiel genauer gesagt zunächst zu einem Select-High-Ventil 32, das ebenfalls an seinem zweiten Eingang mit einer zweiten Redundanzdruckleitung 33 verbunden ist, die mit dem Bremswertgeber BST verbunden ist. Über den Bremswertgeber BST kann ein manueller Redundanzdruck pRM in die zweite Redundanzdruckleitung 33 ausgesteuert werden. Das erste Select-High-Ventil 32 lässt dann den höheren des manuell ausgesteuerten Redundanzdrucks pRM und des Redundanzdrucks pR durch und steuert diesen in eine dritte Redundanzdruckleitung 34 aus, die ihrerseits dann mit dem Betriebs-Vorderachsmodulator 114 verbunden ist, der den ausgesteuerten Redundanzdruck dann entsprechend umsetzen kann. Dazu weist der Betriebs-Vorderachsmodulator 114 entsprechende pneumatische und/oder elektropneumatische Ventile auf, die hier nicht gezeigt sind. In dem einfachsten Fall steuert der Betriebs-Vorderachsmodulator 114 einen äquivalenten, den an diesem ausgesteuerten redundanten Druck verstärkenden Druck als redundant ausgesteuerten Vorderachs-Betriebsbremsdruck pBVA oder Vorderachs-Redundanzbremsdruck pRVA an den Vorderachs-Betriebsbremsen 3a aus.

Das Parkbremsmodul 120 weist ein Invertersteuerventil 140 auf, das den von dem Parkbremsmodul 120 an die Federspeicherbremsen 8 ausgesteuerten Druck invertiert und als Redundanzdruck pR an dem Redundanzausgang 120.1 aussteuert.

Das Parkbremsmodul 120 ist ferner über eine zweite Statusleitung 15 mit dem Betriebsbrems-Steuermodul 110 verbunden und empfängt darüber ein zweites Statussignal Ss2. Es kann zusätzlich ein zweites Fehlersignal St2 empfangen, für den Fall, dass das Betriebsbrems-Steuermodul 110 oder das Redundanzbrems-Steuermodul 210 ausfällt. Wenn beide, das Betriebsbrems-Steuermodul 110 und das Redundanzbrems-Steuermodul 210 ausgefallen sind, kann das Parkbremsmodul 120 sowohl die Hinterachse HA redundant einbremsen, indem entsprechende Parkbremsdrücke pPH an den Federspeicherbremsen 8 bereitgestellt werden, die dann in diesem Fall zum redundanten Betriebsbremsen eingesetzt werden. Über den Redundanzdruck pR, der am Redundanzausgang 120.1 ausgesteuert wird, kann auch die Vorderachse VA redundant mit eingebremst werden.

In dem in Fig. 1 gezeigten Ausführungsbeispiel weist das Bremssystem 100 ferner ein Anhängersteuermodul 130 auf, das hier zusammen mit dem Parkbremsmodul 120 in ein gemeinsames Modul integriert ist. Das Anhängersteuermodul 130 weist einen Anhängerbremsdruckanschluss 131 und einen Anhängerversorgungsdruckanschluss 132 auf, die auch als gelber und roter Kopplungskopf bezeichnet werden. Das Anhängersteuermodul 130 dient dazu, den Anhängerbremsdruck pBA auszusteuern, um den Anhänger mit einzubremsen.

Um für den Fall, dass das Anhängersteuermodul 130 einen Fehler hat, auch die Bremsung des Anhängers redundant durchzuführen, weist das Anhängersteuermodul 130 einen Anhängerredundanzanschluss 130.1 auf, der Anhängerredundanzanschluss 130.1 ist mit einer Anhängerredundanzdruckleitung 26 verbunden, in die ein Anhängerredundanzdruck pRA aussteuerbar ist. Die Anhängerredundanzdruckleitung 26 ist mit einem zweiten Select-High-Ventil 35 verbunden, welches mit seinen Eingängen einerseits mit der zweiten Vorderachs-Betriebsbremsleitung 153 und andererseits mit der zweiten VorderachsRedundanzbremsleitung 253 verbunden ist. Ebenso könnte es aber auch mit der ersten Vorderachs-Betriebsbremsleitung 152 oder der ersten VorderachsRedundanzbremsleitung 252 verbunden sein, oder mit entsprechenden Anschlüssen an dem Betriebs-Vorderachsmodulator 114 oder dem Redundanz-Vorderachsmodulator 214. Entscheidend ist, dass an den beiden Anschlüssen des zweiten Select-High-Ventils 35 einerseits der Vorderachs-Betriebsbremsdruck pBVA und andererseits der Vorderachs-Redundanzbremsdruck pRVA ausgesteuert werden. So wird in die Anhängerredundanzdruckleitung 26 als Anhängerredundanzdruck pRA stets der höhere des Vorderachs-Betriebsbremsdrucks pBVA und des Vorderachs-Redundanzbremsdrucks pRVA ausgesteuert, sodass eine Aussteuerung des Anhängerredundanzdrucks pRA möglich ist, unabhängig davon, ob das Bremssystem 100 im Betriebszustand mit dem Betriebsbrems-Subsystem 102 oder in der ersten Redundanzebene mithilfe des Redundanzbrems-Subsystems 104 arbeitet. Für den Fall, dass das Anhängersteuermodul 130 ausfällt, kann also der Anhängerbremsdruck pBA redundant ausgesteuert werden, indem ein Druck an der Vorderachse VA abgegriffen wird und direkt oder volumenverstärkt an dem Anhängerbremsdruckanschluss 131 ausgesteuert wird.

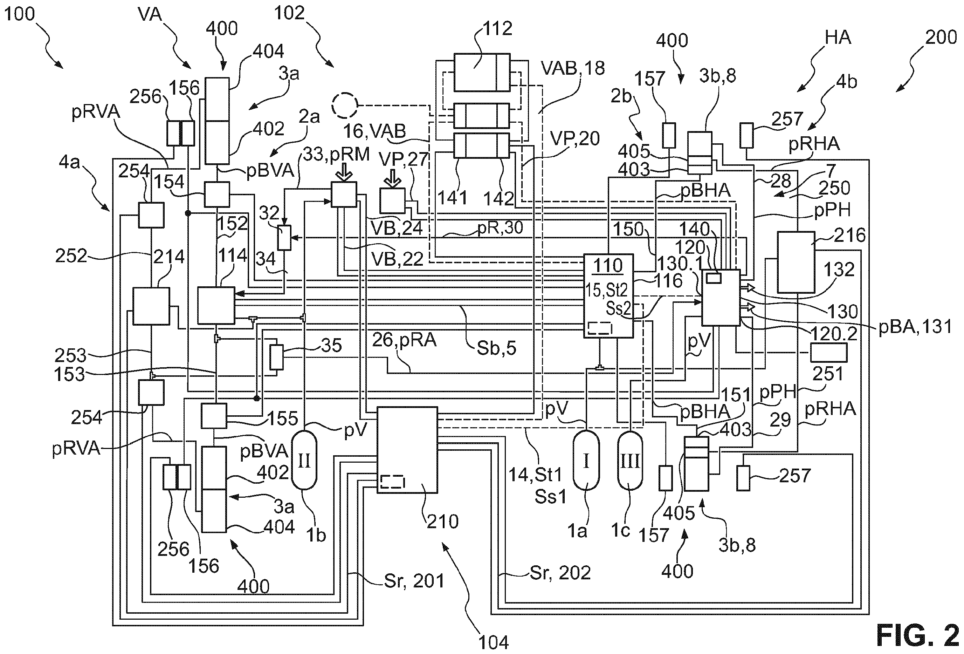

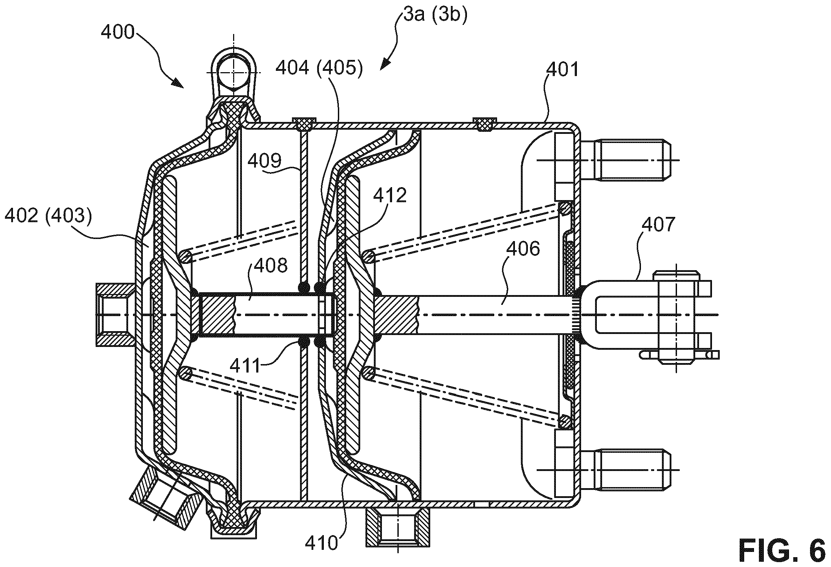

Fig. 2 zeigt ein zweites Ausführungsbeispiel, das auf dem ersten Ausführungsbeispiel (Fig. 1) beruht. Der wesentliche Unterschied liegt darin, dass nicht wie im ersten Ausführungsbeispiel erste, zweite, dritte und vierte Wechselventile 10, 11, 12, 13 für die Vorderachs-Betriebsbremsen 3a bzw. Hinterachs-Betriebsbremsen 3b vorgesehen sind, vielmehr wird im zweiten Ausführungsbeispiel eine besondere Art an Bremszylindern verwendet, wie sie in Fig. 6 im Detail dargestellt ist. Diese Doppelbremszylinder (vgl. Fig. 6) können als Vorderachs-Betriebsbremsen 3a oder Hinterachs-Betriebsbremsen 3b eingesetzt werden. Sie weisen einen Vorderachs-Betriebsbremszylinder 402 bzw. Hinterachs-Betriebsbremszylinder 403 auf (der Einfachheit halber insgesamt als Betriebsbremszylinder 402 bezeichnet). Ferner weisen sie einen redundanten Vorderachs-Bremszylinder 404 bzw. einen redundanten Hinterachs-Bremszylinder 405 auf (der Einfachheit halber insgesamt als redundanter Bremszylinder 404 bezeichnet). Der redundante Bremszylinder 404 wirkt über eine Stange 406 auf ein Anlenkelement 407, welches außerhalb des Gehäuses 401 angeordnet ist. Bei Aufbringen von Druck in den redundanten Bremszylinder 404 bewegt sich die Stange 406 mit Bezug auf Fig. 6 nach rechts. Der Betriebsbremszylinder 402 wirkt auf eine zweite Stange 408, die durch eine Blende 409 und einen Deckel 410 des redundanten Bremszylinders 404 geführt ist und an diesem mittels zweier Dichtungen 411, 412 abgedichtet ist. Die zweite Stange 408 drückt also bei Bewegung des Betriebsbremszylinders 402 mit Bezug auf Fig. 6 nach rechts auf den redundanten Bremszylinder 404 und schiebt diesen ebenfalls nach rechts. Der redundante Bremszylinder 404 wird also von dem Betriebsbremszylinder 402 mitgenommen und mechanisch nach rechts bewegt.

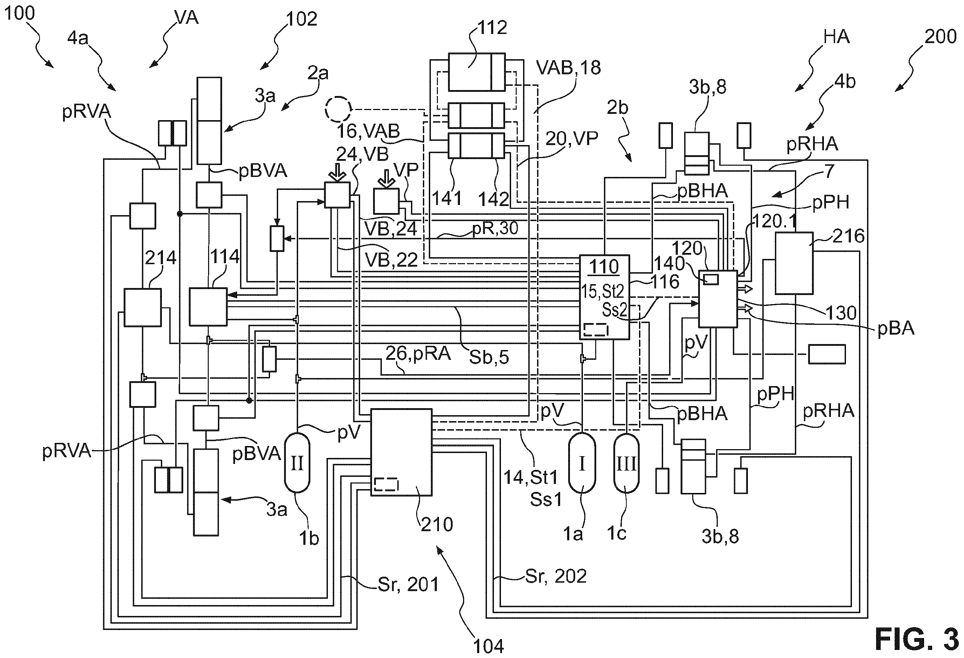

Bei einem dritten Ausführungsbeispiel (Fig. 3) ist ein Bremssystem 100 gezeigt, welches auf dem zweiten Ausführungsbeispiel (Fig. 2) basiert. Wiederum sind gleiche und ähnliche Elemente mit gleichen Bezugszeichen versehen, sodass vollumfänglich auf die obige Beschreibung zum ersten und zweiten Ausführungsbeispiel verwiesen wird. Im Folgenden werden insbesondere die Unterschiede zum ersten und zweiten Ausführungsbeispiel hervorgehoben.

Der maßgebliche Unterschied im dritten Ausführungsbeispiel zum zweiten Ausführungsbeispiel liegt darin, dass der erste Druckluftvorrat 1a mit dem Hinterachs-Betriebsbremskreis 2b und dem Vorderachs-Redundanzbremskreis 4a verbunden ist. In gleicher Weise ist der zweite Druckluftvorrat 1b mit dem Vorderachs-Betriebsbremskreis 2a und dem Hinterachs-Redundanzbremskreis 4b verbunden. Das heißt, der erste Druckluftvorrat 1a stellt Vorratsdruck pV sowohl an dem Betriebsbrems-Steuermodul 110 als auch an dem Betriebs-Vorderachsmodulator 214 bereit. In gleicher Weise stellt der zweite Druckluftvorrat 1b Vorratsdruck pV an dem Betriebs-Vorderachsmodulator 114 als auch dem Redundanz-Hinterachsmodulator 216 bereit.

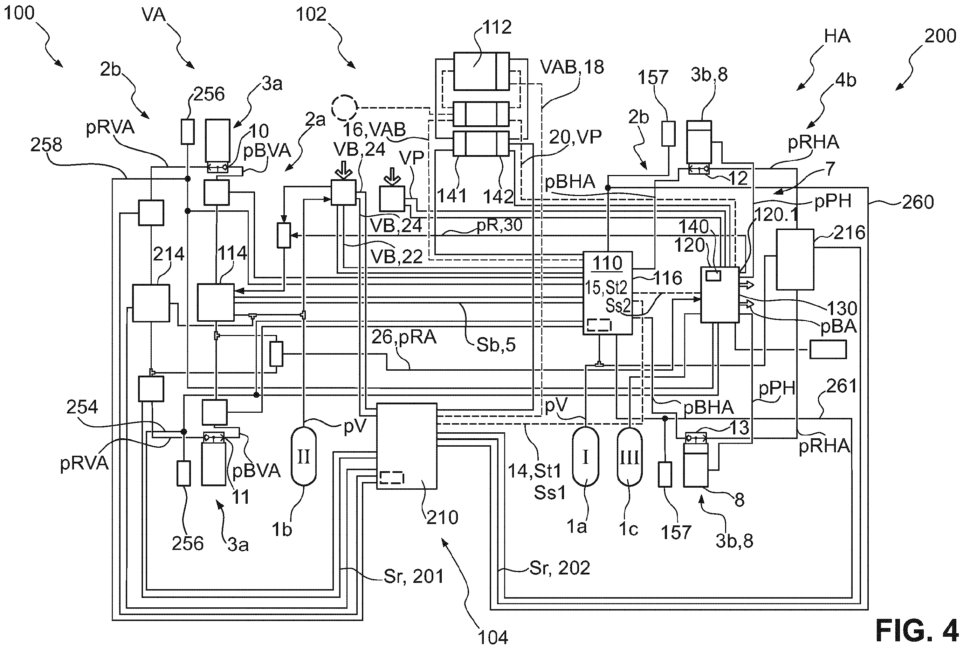

Fig. 4 zeigt ein viertes Ausführungsbeispiel, das grundsätzlich auf dem ersten Ausführungsbeispiel basiert. Insofern sind wiederum die ersten, zweiten, dritten und vierten Wechselventile 10, 11, 12, 13 für die entsprechenden Vorderachs-Betriebsbremsen 3a und Hinterachs-Betriebsbremsen 3b vorgesehen.

Im Unterschied zum ersten Ausführungsbeispiel (Fig. 1) sind in diesem Ausführungsbeispiel (Fig. 4) aber keine redundanten Vorderachs-Radsensoren 256 und redundanten Hinterachs-Radsensoren 257 vorgesehen. Das Bremssystem 100 verfügt nur über die Vorderachs-Radsensoren 156 und Hinterachs-Radsensoren 157. Um aber das Redundanzbrems-Subsystem 104 mit Raddrehzahl-Informationen zu versorgen, greift das Redundanzbrems-Steuermodul 210 über erste und zweite elektrische Vorderachs-Raddrehzahlleitungen 258, 259 sowie erste und zweite Hinterachs-Raddrehzahlleitungen 260, 261 diese Informationen von den Vorderachs- und Hinterachs-Radsensoren 156, 157 ab. Es findet also lediglich eine redundante Verkabelung, aber keine redundante Ausbaustufe inklusive redundanter Sensoren statt.

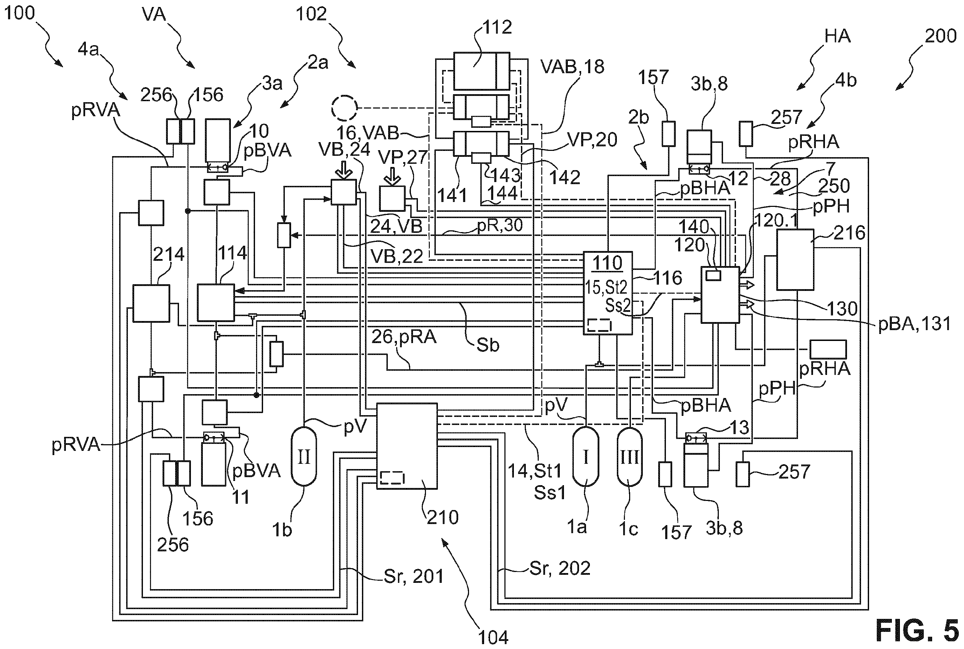

Das fünfte Ausführungsbeispiel (Fig. 5) basiert wiederum auf dem ersten Ausführungsbeispiel. Im Unterschied zum ersten Ausführungsbeispiel ist in dem fünften Ausführungsbeispiel eine dritte Stromquelle 143 vorgesehen. Die dritte Stromquelle 143 ist über eine dritte Stromleitung 144 mit dem Parkbremsmodul 120 verbunden. Das Parkbremsmodul 120 ist in diesem Ausführungsbeispiel wiederum mit dem Anhängersteuermodul 130 integriert, sodass dieses integrierte Modul von der dritten Stromquelle 143 versorgt wird. Die zweite Stromquelle 142 versorgt ausschließlich das Redundanz-Steuermodul 210 und optional den zugeordneten Bremswertgeber BST.

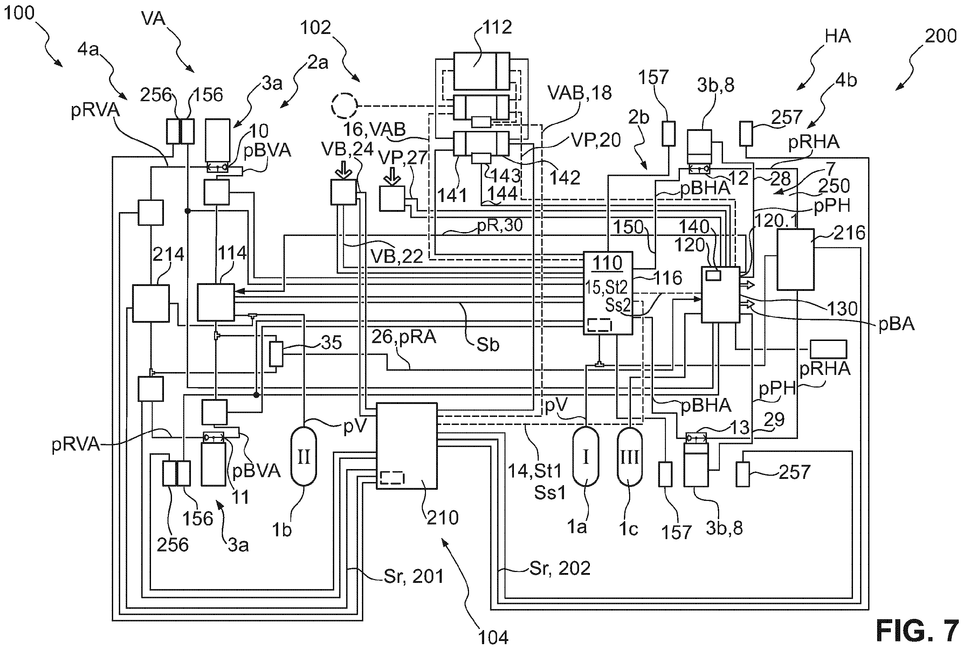

Das sechste Ausführungsbeispiel (Fig. 7) unterscheidet sich vom ersten Ausführungsbeispiel (Fig. 1) dadurch, dass der Bremswertgeber BST nicht pneumatisch redundant ausgebildet ist. Der Bremswertgeber BST ist ausschließlich über die erste Bremswertgeberleitung 22 und die zweite Bremswertgeberleitung 24 elektrisch mit dem Betriebsbrems-Steuermodul 110 bzw. dem Redundanzbrems-Steuermodul 210 verbunden. Der Bremswertgeber BST ist aber weder mit dem zweiten Druckluftvorrat 1b noch mit der zweiten Redundanzleitung 33 verbunden. Insofern ist die erste Redundanzdruckleitung 30 direkt mit dem Betriebs-Vorderachsmodulator 114 verbunden, um an diesem den Redundanzdruck pR auszusteuern. Eine manuelle, pneumatisch redundante Steuerung ist in diesem Bremssystem 100 gemäß dem sechsten Ausführungsbeispiel nicht vorgesehen.

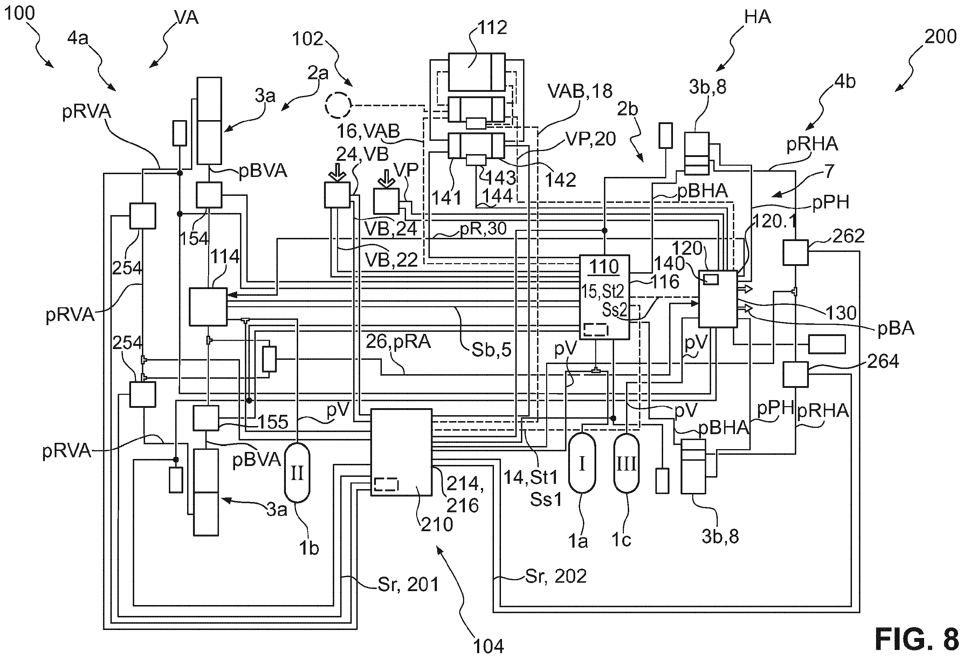

Das siebte Ausführungsbeispiel (Fig. 8) basiert nun wiederum auf dem zweiten Ausführungsbeispiel, wobei in diesem Ausführungsbeispiel (Fig. 8) die Redundanzbrems-Steuereinheit 210 nicht rein elektrisch, sondern elektropneumatisch ausgebildet ist. Genauer gesagt ist der erste Druckluftvorrat 1a, wie bereits beim zweiten Ausführungsbeispiel gezeigt, mit dem Betriebsbrems-Steuermodul 110 verbunden. Andererseits ist der erste Druckluftvorrat 1a auch mit dem Redundanzbrems-Steuermodul 210 verbunden, welches den Vorratsdruck pV aus dem ersten Druckluftvorrat 1a an die Vorderachse VA aussteuert. Die Vorderachse VA verfügt in diesem Ausführungsbeispiel auch nicht über einen Redundanz-Vorderachsmodulator 214, dieser ist in die Redundanzbrems-Steuereinheit 210 integriert. Die Redundanzbrems-Steuereinheit 210 steuert also direkt den redundanten Vorderachs-Bremsdruck pRVA aus, der von dem ersten Druckluftvorrat 1a gespeist wird.

In gleicher Weise ist der zweite Druckluftvorrat 1b einerseits mit dem Betriebs-Vorderachsmodulator 114 verbunden und andererseits mit dem Redundanzbrems-Steuermodul 210. Das Bremssystem 100 verfügt in dem siebten Ausführungsbeispiel (Fig. 8) auch nicht über einen Redundanz-Hinterachsmodulator 216; dieser ist vielmehr in das Redundanzbrems-Steuermodul 210 integriert. Das Redundanzbrems-Steuermodul 210 steuert dann mit Hilfe des zweiten Druckluftvorrats 1b den redundanten Hinterachs-Bremsdruck pRHA direkt an die Hinterachse HA aus. In dem siebten Ausführungsbeispiel sind zusätzlich erste und zweite redundante Hinterachs-ABS-Module 262, 264 vorgesehen, um den von dem Redundanzbrems-Steuermodul 210 ausgesteuerten Hinterachs-Redundanzdruck pRHA radgerecht auf linke und rechte Seiten des Fahrzeugs 200 aufzuteilen.

### Bezugszeichenliste (Bestandteil der Beschreibung)

- 1a: erster Druckluftvorrat
- 1b: zweiter Druckluftvorrat
- 1c: dritter Druckluftvorrat
- 2a: Vorderachs-Betriebsbremskreis
- 2b: Hinterachs-Betriebsbremskreis
- 3a: Vorderachse-Betriebsbremsen
- 3b: Hinterachs-Betriebsbremsen
- 4a: Vorderachs-Redundanzbremskreis
- 4b: Hinterachs-Redundanzbremskreis
- 5: Erste elektrische Leitung
- 7: Parkbremskreis
- 8: Federspeicherbremsen
- 10: erstes Wechselventil
- 11: zweites Wechselventil
- 12: drittes Wechselventil
- 13: viertes Wechselventil
- 14: erste Status-Leitung
- 15: zweite Status-Leitung
- 16: erster Fahrzeug-BUS
- 18: zweiter Fahrzeug-BUS
- 20: dritter Fahrzeug-BUS
- 22: erste Bremswertgeberleitung
- 24: zweite Bremswertgeberleitung
- 26: Anhängerredundanzdruckleitung
- 27: Parkbremsschalterleitung
- 28: erste Federspeicherbremsdruckleitung
- 29: zweite Federspeicherbremsdruckleitung
- 30: Erste Redundanzdruckleitung
- 32: Erstes Select-High-Ventil
- 33: Zweite Redundanzdruckleitung
- 34: Dritte Redundanzdruckleitung
- 35: Zweites Select-High-Ventil
- 100: elektronisch steuerbares Bremssystem
- 102: Betriebsbrems-Subsystem
- 104: Redundanzbrems-Subsystem
- 110: Betriebsbrems-Steuermodul
- 112: Einheit für autonomes Fahren
- 114: Betriebs-Vorderachsmodulator
- 116: Betriebs-Hinterachsmodulator
- 118: erstes ABS-Ventil
- 119: zweites ABS-Ventil
- 120: Parkbremsmodul
- 120.1: Redundanz-Ausgang
- 120.2: Federspeicheranschlüsse
- 130: Anhängersteuermodul
- 130.1: Anhängerredundanzanschluss
- 131: Anhängerbremsdruckanschluss
- 132: Anhängerversorgungsdruckanschluss
- 140: Inverter-Steuerventil
- 141: erste Stromquelle
- 142: zweite Stromquelle
- 143: dritte Stromquelle
- 144: dritte Stromleitung
- 150: erste Hinterachsbetriebsbremsleitung
- 151: zweite Hinterachsbetriebsbremsleitung
- 152: erste Vorderachsbetriebsbremsleitung
- 153: zweite Vorderachsbetriebsbremsleitung
- 154: erstes Vorderachs-ABS-Modul
- 155: zweites Vorderachs-ABS-Modul
- 156: Vorderachs-Radsensoren
- 157: Hinterachs-Radsensoren
- 200: Fahrzeug, Nutzfahrzeug
- 201: zweite elektrische Leitung
- 210: Redundanzbrems-Steuermodul
- 214: Redundanz-Vorderachsmodulator
- 216: Redundanz-Hinterachsmodulator
- 218: erstes redundantes ABS-Ventil
- 219: zweites redundantes ABS-Ventil
- 250: erste Hinterachsredundanzbremsleitung
- 251: zweite Hinterachsredundanzbremsleitung
- 252: erste Vorderachsredundanzbremsleitung
- 253: zweite Vorderachsredundanzbremsleitung
- 254: erstes redundantes Vorderachs-ABS-Modul
- 255: zweites redundantes Vorderachs-ABS-Modul
- 256: redundante Vorderachs-Radsensoren
- 257: redundante Hinterachs-Radsensoren
- 258: erste Vorderachs-Raddrehzahlleitung
- 259: zweite Vorderachs-Raddrehzahlleitung
- 260: erste Hinterachs-Raddrehzahlleitung
- 261: zweite Hinterachs-Raddrehzahlleitung
- 400: Doppelbremszylinder
- 402: Vorderachs-Betriebsbremszylinder (Betriebsbremszylin-der)
- 403: Vorderachs-Betriebsbremszylinder
- 404: redundanter Vorderachs-Bremszylinder
- 405: redundanter Hinterachs-Bremszylinder
- HCU: Parkbremsschalter
- VA: Vorderachse
- HA: Hinterachse
- pBA: Anhängerbremsdruck
- pBVA: Vorderachse-Betriebsbremsdruck
- pBHA: Hinterachs-Betriebsbremsdruck
- pRVA: Vorderachs-Redundanzbremsdruck
- pRHA: Hinterachs-Redundanzbremsdruck
- pPH: Parkbremsdruck
- pR: redundanter Steuerdruck
- pRA: Anhänger-Redundanzdruck
- pRM: Manuell ausgesteuerter Redundanzdruck
- VAB: Assistenz-Bremsvorgabe
- VB: Betriebsbrems-Bremsvorgabe
- VP: Parkbrems-Bremsvorgabe
- Sb: Betriebsbrems-Steuersignal
- Sr: Redundanzbrems-Steuersignal
- St1: erstes Timeout-Signal
- St2: zweites Timeout-Signal
- zSoll: Fahrzeug-Soll-Verzögerung

## Patentansprüche

1. Elektronisch steuerbares Bremssystem (100), insbesondere elektronisch steuerbares pneumatisches Bremssystem (100), für ein Fahrzeug (200), insbesondere Nutzfahrzeug (200), mindestens aufweisend:
ein Betriebsbrems-Subsystem (102), mit:
- einem Vorderachs-Betriebsbremskreis (2a) mit Vorderachs-Betriebsbremsen (3a),
- einem Hinterachs-Betriebsbremskreis (2b) mit Hinterachs-Betriebsbremsen (3b), und
- einem Betriebsbrems-Steuermodul (110), wobei den Vorderachs-Betriebsbremsen (3a) ein Vorderachs-Betriebsbremsdruck (pBVA) und den Hinterachs-Betriebsbremsen (3b) ein Hinterachs-Betriebsbremsdruck (pBHA) zuführbar ist und das Betriebsbrems-Steuermodul (110) ausgebildet ist, in Abhängigkeit einer Bremsvorgabe (VAB, VB, VP) ein Betriebsbrems-Steuersignal (Sb) zu erzeugen, wobei der Vorderachs- und Hinterachs-Betriebsbremsdruck (pBVA, pBHA) in Abhängigkeit des Betriebsbrems-Steuersignals (Sb) erzeugt und an die Vorderachs- und Hinterachs-Betriebsbremsen (3a, 3b) vorgegeben werden kann zum von dem Betriebsbrems-Steuermodul (110) elektrisch gesteuerten Umsetzen der Bremsvorgabe (VAB, VB, VP) über den Vorderachs-Betriebsbremskreis (2a) und den Hinterachs-Betriebsbremskreis (2b); und **gekennzeichnet durch**
ein Redundanzbrems-Subsystem (104), mit:
- einem Vorderachs-Redundanzbremskreis (4a),
- einem Hinterachs-Redundanzbremskreis (4b), und
- einem Redundanzbrems-Steuermodul (210), wobei den Vorderachs-Betriebsbremsen (3a) ein Vorderachs-Redundanzbremsdruck (pRVA) und den Hinterachs-Betriebsbremsen (3b) ein Hinterachs-Redundanzbremsdruck (pRHA) zuführbar ist und das Redundanzbrems-Steuermodul (210) ausgebildet ist, in Abhängigkeit einer Bremsvorgabe (VAB, VB, VP) ein Redundanzbrems-Steuersignal (Sr) zu erzeugen, wobei der Vorderachs- und Hinterachs-Redundanzbremsdruck (pRVA, pRHA) in Abhängigkeit des Redundanzbrems-Steuersignals (Sr) erzeugt und an die Vorderachs- und Hinterachs-Betriebsbremsen (3a, 3b) vorgegeben werden kann zum von dem Redundanzbrems-Steuermodul (210) elektrisch gesteuerten Umsetzen der Bremsvorgabe (VAB, VB) über den Vorderachs-Redundanzbremskreis (4a) und den Hinterachs-Redundanzbremskreis (4b).

2. Elektronisch steuerbares Bremssystem (100) nach Anspruch 1, wobei
der Hinterachs-Betriebsbremskreis (2b) und der Hinterachs-Redundanzbremskreis (4b) mit einem ersten Druckluftvorrat (1a) verbunden sind, und der Vorderachs-Betriebsbremskreis (2a) und der Vorderachs-Redundanzbremskreis (4a) mit einem zweiten Druckluftvorrat (1b) verbunden sind; oder
der Hinterachs-Betriebsbremskreis (2b) und der Vorderachs-Redundanzbremskreis (4a) mit einem ersten Druckluftvorrat (1a) verbunden sind, und der Vorderachs-Betriebsbremskreis (2a) und der Hinterachs-Redundanzbremskreis (4b) mit einem zweiten Druckluftvorrat (1b) verbunden sind.

3. Elektronisch steuerbares Bremssystem (100) nach Anspruch 1 oder 2, aufweisend:
- einen Parkbremskreis (7) mit Federspeicherbremsen (8), wobei den Federspeicherbremsen (8) ein Parkbrems-Bremsdruck (pPH) zuführbar ist, wobei der Parkbrems-Bremsdruck (pPH) in Abhängigkeit der Bremsvorgabe (VAB, VB, VP) erzeugt und an die Federspeicherbremsen (8) vorgegeben werden kann zum Umsetzen der Bremsvorgabe (VAB, VB, VP) über den Parkbremskreis (7).

4. Elektronisch steuerbares Bremssystem (100) nach Anspruch 3, wobei der Parkbremskreis (7) mit einem dritten Druckluftvorrat (1c) verbunden ist.

5. Elektronisch steuerbares Bremssystem (100) nach einem der vorstehenden Ansprüche, wobei
der Vorderachs-Betriebsbremskreis (2a) und der Vorderachs-Redundanz-Bremskreis (4a) über erste und zweite Wechselventile (10, 11) mit den entsprechenden Vorderachs-Betriebsbremsen (3a) verbunden sind, derart, dass jeweils der höhere des Vorderachs-Betriebsbremsdrucks (pBVA) und des Vorderachs-Redundanzbremsdrucks (pRVA) an den Vorderachs-Betriebsbremsen (3a) ausgesteuert wird; und
der Hinterachs-Betriebsbremskreis (2b) und der Hinterachs-RedundanzBremskreis (4b) über dritte und vierte Wechselventile (12, 13) mit den entsprechenden Hinterachs-Betriebsbremsen (3b) verbunden sind, derart, dass jeweils der höhere des Hinterachs-Betriebsbremsdrucks (pBHA) und des Hinterachs-Redundanzbremsdrucks (pRHA) an den Hinterachs-Betriebsbremsen (3b) ausgesteuert wird.

6. Elektronisch steuerbares Bremssystem (100) nach einem der vorstehenden Ansprüche 1 bis 4, wobei die Vorderachs-Betriebsbremsen (3a) einen Vorderachs-Betriebsbremszylinder (402) und einen redundanten Vorderachs-Bremszylinder (404) aufweisen, wobei der Vorderachs-Betriebsbremskreis (2a) mit dem Vorderachs-Betriebsbremszylinder (402) und der Vorderachs-Redundanzbremskreis (4a) mit dem redundanten Vorderachs-Bremszylinder (404) verbunden ist, und/oder die Hinterachs-Betriebsbremsen (3b) einen Hinterachs-Betriebsbremszylinder (403) und einen redundanten Hinterachs-Bremszylinder (405) aufweisen, wobei der Hinterachs-Betriebsbremskreis (2b) mit dem Hinterachs-Betriebsbremszylinder (403) und der Hinterachs-Redundanzbremskreis (4b) mit dem redundanten Hinterachs-Bremszylinder (405) verbunden ist.

7. Elektronisch steuerbares Bremssystem (100) nach einem der vorstehenden Ansprüche, wobei das Betriebsbrems-Steuermodul (110) und das Redundanzbrems-Steuermodul (210) über eine erste Status-Leitung (14) zum Übertragen eines ersten Status-Signals (Ss1) miteinander verbunden sind, und das Redundanzbrems-Steuermodul (210) dazu eingerichtet ist, für den Fall, dass ein elektrisch gesteuertes Umsetzen der Bremsvorgabe (VAB, VB, VP) über den Vorderachs-Betriebsbremskreis (2a) und/oder den Hinterachs-Betriebsbremskreis (2b) durch das Betriebsbrems-Steuermodul (110) verhindert ist, ein erstes Fehler-Signal (St1) von dem Betriebsbrems-Steuermodul (110) über die erste Status-Leitung (14) zu empfangen und/oder dazu eingerichtet ist, für den Fall eines Ausbleibens des ersten Status-Signals (Ss1) einen Fehler zu ermitteln.

8. Elektronisch steuerbares Bremssystem (100) nach einem der vorstehenden Ansprüche, wobei das Betriebsbrems-Steuermodul (110) über einen ersten Fahrzeug-BUS (16) mit einer Einheit (112) für autonomes Fahren, und das Redundanzbrems-Steuermodul (210) über einen zweiten Fahrzeug-BUS (18) mit der Einheit (112) für autonomes Fahren zum Empfang der Bremsvorgabe (VAB) verbunden ist.

9. Elektronisch steuerbares Bremssystem (100) nach einem der vorstehenden Ansprüche, aufweisend einen Bremswertgeber (BST) zum Bereitstellen einer manuellen Bremsvorgabe (VB), wobei der Bremswertgeber (BST) durch eine erste Bremswertgeberleitung (22) mit dem Betriebsbrems-Steuermodul (110) und durch eine zweite Bremswertgeberleitung (24) mit dem Redundanzbrems-Steuermodul (210) verbunden ist.

10. Elektronisch steuerbares Bremssystem (100) nach einem der vorstehenden Ansprüche, wobei
das Betriebsbrems-Subsystem (102) einen mit dem Betriebsbrems-Steuermodul (110) verbundenen Betriebs-Vorderachsmodulator (114) und einen Betriebs-Hinterachsmodulator (116) aufweist, die dazu ausgebildet sind, das Betriebsbrems-Steuersignal (Sb) zu empfangen und den Vorderachs- bzw. Hinterachs-Betriebsbremsdruck (pBVA, pBHA) auszusteuern; und wobei
das Redundanzbrems-Subsystem (104) einen mit dem Redundanzbrems-Steuermodul (210) verbundenen Redundanz-Vorderachsmodulator (214) und einen Redundanz-Hinterachsmodulator (216) aufweist, die dazu ausgebildet sind, das Redundanzbrems-Steuersignal (Sr) zu empfangen und den Vorderachs- bzw. Hinterachs-Redundanzbremsdruck (pRVA, pRHA) auszusteuern.

11. Elektronisch steuerbares Bremssystem (100) nach Anspruch 10, wobei
das Betriebsbrems-Subsystem (102) erste und zweite ABS-Ventile (118, 119) aufweist, die jeweils zwischen dem Betriebs-Vorderachsmodulator (114) und der entsprechenden Vorderachs-Betriebsbremse (3a) angeordnet sind; und
das Redundanzbrems-Subsystem (104) erste und zweite redundante ABS-Ventile (218, 219) aufweist, die jeweils zwischen dem Redundanz-Vorderachsmodulator (214) und der entsprechenden Vorderachs-Betriebsbremse (3a) angeordnet sind.

12. Elektronisch steuerbares Bremssystem (100) nach Anspruch 3, ferner aufweisend ein Parkbremsmodul (120), das zum Steuern des Parkbremskreises (7) ausgebildet ist, wobei das Parkbremsmodul (120) in Abhängigkeit von einem Empfang einer Parkbrems-Bremsvorgabe (VP) den Parkbremsdruck (pPH) aussteuert.

13. Elektronisch steuerbares Bremssystem (100) nach Anspruch 12, wobei
das Betriebsbrems-Steuermodul (110) und das Parkbremsmodul (120) über eine zweite Status-Leitung (15) miteinander verbunden sind, und das Parkbremsmodul (120) dazu eingerichtet ist, im Fehlerfall ein zweites FehlerSignal (St2) von dem Betriebsbrems-Steuermodul (110) über die zweite StatusLeitung (14) zu empfangen und/oder dazu eingerichtet ist, für den Fall eines Ausbleibens des ersten Status-Signals (Ss1) einen Fehler zu ermitteln; und
wobei das Parkbremsmodul (120) dazu ausgebildet ist, in Abhängigkeit vom Empfang des zweiten Fehler-Signals (St2) und/oder des Ausbleibens des ersten Status-Signals (Ss1) einen redundanten Steuerdruck (pR) für den Vorderachs-Betriebsbremskreis (2a) und/oder den Vorderachs-Redundanzbremskreis (4a) bereitzustellen.

14. Elektronisch steuerbares Bremssystem (100) nach Anspruch 13, wobei das Parkbremsmodul (120) ein Inverter-Steuerventil (140) mit einem Redundanz-Ausgang (120.1) aufweist, wobei das Inverter-Steuerventil (140) ausgebildet ist, einen redundanten Steuerdruck (pR) zu erzeugen und über den Redundanz-Ausgang (120.1) auszugeben, wobei der redundante Steuerdruck (pR) umgekehrt proportional zu dem Parkbrems-Bremsdruck (pPH) ist, wobei der Vorderachs-Betriebsbremsdruck (pBVA) in Abhängigkeit des von dem InverterSteuerventil (140) vorgegebenen redundanten Steuerdrucks (pR) an die Vorderachs-Betriebsbremsen (3a) aussteuerbar ist, falls ein durch das Redundanzbrems-Steuermodul (210) elektrisch gesteuertes Umsetzen der Bremsvorgabe (VAB, VB, VP) über den Vorderachs-Redundanzbremskreis (4a) verhindert ist.

15. Elektronisch steuerbares Bremssystem (100) nach einem der vorstehenden Ansprüche, ferner aufweisend ein Anhängersteuermodul (130), das zum Aussteuern eines Anhängerbremsdrucks (pBA) vorgesehen ist.

16. Elektronisch steuerbares Bremssystem (100) nach Anspruch 15, wobei
das Betriebsbrems-Steuermodul (110) und das Anhängersteuermodul (130) über eine zweite Status-Leitung (15) zum Übertragen eines zweiten Status-Signals (Ss2) miteinander verbunden sind, und das Anhängersteuermodul (130) dazu eingerichtet ist, im Fehlerfall ein zweites Fehler-Signal (St2) von dem Betriebsbrems-Steuermodul (110) über die zweite Status-Leitung (14) zu empfangen und/oder dazu eingerichtet ist, für den Fall eines Ausbleibens des zweiten Status-Signals (Ss2) einen Fehler zu ermitteln; und
wobei das Anhängersteuermodul (130) dazu ausgebildet ist, in Abhängigkeit vom Empfang des zweiten Fehler-Signals (St2) und/oder des Ausbleibens des zweiten Status-Signals (Ss2) einen redundanten Steuerdruck (pR) für den Vorderachs-Betriebsbremskreis (2a) und/oder den Vorderachs-Redundanzbremskreis (4a) bereitzustellen.

17. Elektronisch steuerbares Bremssystem (100) nach Anspruch 13 und 16, wobei das Parkbremsmodul (120) und das Anhängersteuermodul (130) in einem gemeinsamen ersten integrierten Modul (EPTM) integriert sind.

18. Elektronisch steuerbares Bremssystem (100) nach Anspruch 16 oder 17, wobei das Anhängersteuermodul (130) mit einer Anhängerredundanzdruckleitung (26) verbunden ist, in die der jeweils höhere des Vorderachs-Betriebsbremsdrucks (pBVA) und des Vorderachs-Redundanzbremsdrucks (pRVA) als Anhängerredundanzdruck (pRA) ausgesteuert wird, wobei das Anhängersteuermodul (130) dazu ausgebildet ist, in Abhängigkeit des Empfangs des zweiten Fehler-Signals (St2) und/oder bei Ausbleiben des zweiten StatusSignals (Ss2) den Anhängerredundanzdruck (pRA) als Anhängerbremsdruck (pBA) auszusteuern.

19. Elektronisch steuerbares Bremssystem (100) nach einem der Ansprüche 12 bis 18, aufweisend eine erste Stromquelle (141), eine zweite Stromquelle (142) und eine dritte Stromquelle (143), wobei die erste Stromquelle (141) mit dem Betriebsbrems-Steuermodul (110), die zweite Stromquelle (142) mit dem Redundanzbrems-Steuermodul (210), und die dritte Stromquelle (143) mit dem Parkbremsmodul (120) und/oder dem Anhängersteuermodul (130) verbunden ist.

20. Fahrzeug (200), insbesondere Nutzfahrzeug (200), mit einem elektronisch steuerbaren Bremssystem (100) nach einem der vorhergehenden Ansprüche.

21. Verfahren zum Steuern eines elektronisch steuerbaren Bremssystems (100) nach einem der Ansprüche 1 bis 19, mit mindestens den folgenden Schritten:
- Feststellen, ob die Bremsvorgabe (VAB, VB, VP) über den Vorderachs-Betriebsbremskreis (2a) und/oder den Hinterachs-Betriebsbremskreis (2b) elektrisch gesteuert durch das Betriebsbrems-Steuermodul (110) umgesetzt werden kann;
falls ein durch das Betriebsbrems-Steuermodul (110) elektrisch gesteuertes Umsetzen der Bremsvorgabe (VAB, VB, VP) über den Vorderachs-Betriebsbremskreis (2a) und/oder den Hinterachs-Betriebsbremskreis (2b) verhindert ist:
- Feststellen, ob die Bremsvorgabe (VAB, VB, VP) über den Vorderachs-Redundanzbremskreis (4a) und/oder den Hinterachs-Redundanzbremskreis (4b) elektrisch gesteuert durch das Redundanzbrems-Steuermodul (210) umgesetzt werden kann; und falls ein durch das Redundanzbrems-Steuermodul (210) elektrisch gesteuertes Umsetzen der Bremsvorgabe (VAB, VB, VP) über den Vorderachs-Redundanzbremskreis (4a) und/oder den Hinterachs-Redundanzbremskreis (4b) nicht verhindert ist:
- Aussteuern des Vorderachs- und Hinterachs-Redundanzbremsdrucks (pRVA, pRHA) in Abhängigkeit des vom Redundanzbrems-Steuermodul (210) erzeugten Redundanzbrems-Steuersignals (Sr) an den Vorderachs- und Hinterachs-Betriebsbremsen (3a, 3b), zum von dem Redundanzbrems-Steuermodul (210) elektrisch gesteuerten Umsetzen der Bremsvorgabe (VAB, VB, VP) über den Vorderachs-Redundanzbremskreis (4a) und den Hinterachs-Redundanzbremskreis (4b).

22. Verfahren nach Anspruch 21, aufweisend:
- Bereitstellen eines ersten Status-Signals (Ss1) durch das Betriebsbrems-Steuermodul (110) an dem Redundanzbrems-Steuermodul (210);
und für den Fall, dass ein elektrisch gesteuertes Umsetzen der Bremsvorgabe (VAB, VB, VP) über den Vorderachs-Betriebsbremskreis (2a) und/oder den Hinterachs-Betriebsbremskreis (2b) durch das Betriebsbrems-Steuermodul (110) verhindert ist:
- Bereitstellen eines ersten Fehler-Signals (St1) durch das Betriebsbrems-Steuermodul (110), und
- Empfangen des ersten Fehler-Signals (St1) an dem Redundanzbrems-Steuermodul (210); und/oder
- Ermitteln eines Fehlers des Betriebsbrems-Steuermoduls (110) für den Fall eines Ausbleibens des ersten Status-Signals (Ss1).

23. Verfahren nach Anspruch 21 oder 22, aufweisend:
- Empfangen der Assistenz-Bremsvorgabe (VAB) an dem Betriebsbrems-Steuermodul (110) über einen ersten Fahrzeug-BUS (16) von der Einheit (112) für autonomes Fahren; und
- Empfangen der Assistenz-Bremsvorgabe (VAB) an dem Redundanzbrems-Steuermodul (210) über einen zweiten Fahrzeug-BUS (18) von der Einheit (112) für autonomes Fahren.

24. Verfahren nach einem der vorstehenden Ansprüche 21 bis 23, aufweisend:
- Empfangen einer Parkbrems-Vorgabe (VP) an dem Parkbremsmodul (120) und Aussteuern eines Parkbremsdrucks (pPH); und
- Empfangen eines zweiten Status-Signals (Ss2) an dem Parkbremsmodul (120);
und für den Fall, dass ein elektrisch gesteuertes Umsetzen der Bremsvorgabe (VAB, VB, VP) über den Vorderachs-Betriebsbremskreis (2a) und/oder den Hinterachs-Betriebsbremskreis (2b) durch das Betriebsbrems-Steuermodul (110) verhindert ist:
- Bereitstellen des zweiten Fehler-Signals (St2) durch das Betriebsbrems-Steuermodul (110) an dem Parkbremsmodul (120); und/oder
- Ermitteln eines Fehlers des Betriebsbrems-Steuermoduls (110) für den Fall eines Ausbleibens des zweiten Status-Signals (Ss2); und
- Aussteuern eines redundanten Steuerdrucks (pR) für den Vorderachs-Betriebsbremskreis (2a) und/oder den Vorderachs-Redundanzbremskreis (4a) durch das Parkbremsmodul (120) in Abhängigkeit vom Empfang des zweiten Fehler-Signals (St2) oder des ermittelten Fehlers durch das Parkbremsmodul (120).

25. Verfahren nach einem der vorstehenden Ansprüche 21 bis 23, aufweisend:
- Aussteuern eines Anhängerbremsdrucks (pBA) durch ein Anhängersteuermodul (130);
- Empfangen des zweiten Status-Signals (Ss2) an dem Anhängersteuermodul (130);
und für den Fall, dass ein elektrisch gesteuertes Umsetzen der Bremsvorgabe (VAB, VB, VP) über den Vorderachs-Betriebsbremskreis (2a) und/oder den Hinterachs-Betriebsbremskreis (2b) durch das Betriebsbrems-Steuermodul (110) verhindert ist:
- Bereitstellen des zweiten Fehler-Signals (St2) durch das Betriebsbrems-Steuermodul (110) an dem Anhängersteuermodul (130); und/oder
- Ermitteln eines Fehlers des Betriebsbrems-Steuermoduls (110) für den Fall eines Ausbleibens des zweiten Status-Signals (Ss2); und
- Aussteuern eines redundanten Steuerdrucks (pR) für den Vorderachs-Betriebsbremskreis (2a) und/oder den Vorderachs-Redundanzbremskreis (4a) durch das Parkbremsmodul (120) in Abhängigkeit vom Empfang des zweiten Fehler-Signals (St2) oder des ermittelten Fehlers durch das Anhängersteuermodul (130).

26. Verfahren nach einem der vorstehenden Ansprüche 21 bis 25, aufweisend:
- Empfangen des jeweils höheren des Vorderachs-Betriebsbremsdrucks (pBVA) und des Vorderachs-Redundanzbremsdrucks (pRVA) als Anhängerredundanzdruck (pRA) über eine Anhängerredundanzdruckleitung (26) an dem Anhängersteuermodul (130); und
- Aussteuern des Anhängerredundanzdrucks (pRA) als Anhängerbremsdruck (pBA).

## Claims

1. An electronically controllable brake system (100), in particular electronically controllable pneumatic brake system (100), for a vehicle (200), in particular commercial vehicle (200), at least comprising:
a service brake subsystem (102), having:
- a front axle service brake circuit (2a) with front axle service brakes (3a),
- a rear axle service brake circuit (2b) with rear axle service brakes (3b), and
- a service brake control module (110), wherein a front axle service brake pressure (pBVA) can be supplied to the front axle service brakes (3a) and a rear axle service brake pressure (pBHA) can be supplied to the rear axle service brakes (3b), and the service brake control module (110) is designed to generate a service brake control signal (Sb) as a function of a brake input (VAB, VB, VP), wherein the front-axle and rear-axle service brake pressure (pBVA, pBHA) can be generated as a function of the service brake control signal (Sb) and can be predefined to the front axle and rear axle service brakes (3a, 3b) for converting the brake predefinition (VAB, VB, VP) via the front axle service brake circuit (2a) and the rear axle service brake circuit (2b) in an electrically controlled manner by the service brake control module (110); and
**characterized by**
a redundancy brake subsystem (104) having:
- a front axle redundancy brake circuit (4a),
- a rear axle redundancy brake circuit (4b), and
- a redundancy brake control module (210), wherein a front axle redundancy brake pressure (pRVA) can be supplied to the front axle service brakes (3a) and a rear axle redundancy brake pressure (pRHA) can be supplied to the rear axle service brakes (3b), and the redundancy brake control module (210) is designed to generate a redundancy brake control signal (Sr) as a function of a brake specification (VAB, VB, VP), wherein the front axle and rear axle redundancy brake pressure (pRVA, pRHA) can be generated in dependence on the redundancy brake control signal (Sr) and can be pre-set to the front axle and rear axle service brakes (3a, 3b) for converting the brake pre-set (VAB, VB) via the front axle redundancy brake circuit (4a) and the rear axle redundancy brake circuit (4b) electrically controlled by the redundancy brake control module (210).

2. The electronically controllable brake system (100) according to claim 1, wherein
the rear axle service brake circuit (2b) and the rear axle redundancy brake circuit (4b) are connected to a first compressed air supply (1a), and the front axle service brake circuit (2a) and the front axle redundancy brake circuit (4a) are connected to a second compressed air supply (1b); or
the rear axle service brake circuit (2b) and the front axle redundancy brake circuit (4a) are connected to a first compressed air supply (1a), and the front axle service brake circuit (2a) and the rear axle redundancy brake circuit (4b) are connected to a second compressed air supply (1b).

3. The electronically controllable brake system (100) according to claim 1 or 2, comprising:
- a parking brake circuit (7) with spring-loaded brakes (8), wherein a parking brake pressure (pPH) can be supplied to the spring-loaded brakes (8), wherein the parking brake pressure (pPH) can be generated in dependence on the brake input (VAB, VB, VP) and can be given to the spring-loaded brakes (8) for converting the brake input (VAB, VB, VP) via the parking brake circuit (7).

4. The electronically controllable brake system (100) according to claim 3, wherein the parking brake circuit (7) is connected to a third compressed air supply (1c).

5. The electronically controllable brake system (100) according to any of the preceding claims, wherein
the front axle service brake circuit (2a) and the front axle redundancy brake circuit (4a) are connected to the respective front axle service brakes (3a) via first and second shuttle valves (10,11) such that the higher of the front axle service brake pressure (pBVA) and the front axle redundancy brake pressure (pRVA) is controlled at the front axle service brakes (3a), respectively; and
the rear axle service brake circuit (2b) and the rear axle redundancy brake circuit (4b) are connected to the respective rear axle service brakes (3b) via third and fourth shuttle valves (12, 13) such that the higher of the rear axle service brake pressure (pBHA) and the rear axle redundancy brake pressure (pRHA) at the rear axle service brakes (3b) is controlled, respectively.

6. The electronically controllable brake system (100) according to any one of the preceding claims 1 to 4, wherein the front axle service brakes (3a) comprise a front axle service brake cylinder (402) and a redundant front axle brake cylinder (404), the front axle service brake circuit (2a) being connected to the front axle service brake cylinder (402) and the front axle redundant brake circuit (4a) being connected to the redundant front axle brake cylinder (404), and/or the rear axle service brakes (3b) comprise a rear axle service brake cylinder (403) and a redundant rear axle brake cylinder (405), wherein the rear axle service brake circuit (2b) is connected to the rear axle service brake cylinder (403) and the rear axle redundant brake circuit (4b) is connected to the redundant rear axle brake cylinder (405).

7. The electronically controllable brake system (100) according to any of the preceding claims, wherein the service brake control module (110) and the redundancy brake control module (210) are connected to one another via a first status line (14) for transmitting a first status signal (Ss1), and the redundancy brake control module (210) is set up to transmit a first error signal (Ss1) in the event that an electrically controlled conversion of the brake command (VAB, VB, VP) via the front axle service brake circuit (2a) and/or the rear axle service brake circuit (2b) is prevented by the service brake control module (110), a first fault signal (St1) is received from the service brake control module (110) via the first status line (14) and/or is arranged to determine a fault in the event of failure of the first status signal (Ss1).

8. The electronically controllable brake system (100) according to any of the preceding claims, wherein the service brake control module (110) is connected to an autonomous driving unit (112) via a first vehicle BUS (16), and the redundant brake control module (210) is connected to the autonomous driving unit (112) via a second vehicle BUS (18) for receiving the brake command (VAB).

9. The electronically controllable brake system (100) according to any of the preceding claims, comprising a brake value transmitter (BST) for providing a manual brake input (VB), wherein the brake value transmitter (BST) is connected to the service brake control module (110) by a first brake value transmitter line (22) and to the redundancy brake control module (210) by a second brake value transmitter line (24).

10. The electronically controllable brake system (100) according to any of the preceding claims, wherein
the service brake subsystem (102) comprises a service front axle modulator (114) connected to the service brake control module (110) and a service rear axle modulator (116) adapted to receive the service brake control signal (Sb) and to control the front and rear axle service brake pressures (pBVA, pBHA) respectively; and wherein
the redundancy brake subsystem (104) comprises a front axle redundancy modulator (214) connected to the redundancy brake control module (210) and a rear axle redundancy modulator (216) adapted to receive the redundancy brake control signal (Sr) and to control the front and rear axle redundancy brake pressures (pRVA, pRHA), respectively.

11. The electrically controllable brake system (100) according to claim 10, wherein
the service brake subsystem (102) comprises first and second ABS valves (118, 119) each located between the service front axle modulator (114) and the corresponding front axle service brake (3a); and
the redundancy brake subsystem (104) comprises first and second redundant ABS valves (218, 219) each disposed between the redundancy front axle modulator (214) and the corresponding front axle service brake (3a).

12. The electronically controllable brake system (100) of claim 3, further comprising a parking brake module (120) configured to control the parking brake circuit (7), wherein the parking brake module (120) controls the parking brake pressure (pPH) in response to receiving a parking brake command (VP).

13. The electrically controllable brake system (100) according to claim 12, wherein
the service brake control module (110) and the parking brake module (120) are connected to one another via a second status line (15), and the parking brake module (120) is set up to receive a second fault signal (St2) from the service brake control module (110) via the second status line (14) in the event of a fault and/or is set up to determine a fault in the event of the first status signal (Ss1) not being received; and
wherein the parking brake module (120) is configured to provide a redundant control pressure (pR) for the front axle service brake circuit (2a) and/or the front axle redundant brake circuit (4a) depending on the reception of the second error signal (St2) and/or the absence of the first status signal (Ss1).

14. The electronically controllable brake system (100) of claim 13, wherein the parking brake module (120) comprises an inverter control valve (140) having a redundancy output (120.1), the inverter control valve (140) being adapted to generate and output a redundant control pressure (pR) via the redundancy output (120.1), the redundant control pressure (pR) being inversely proportional to the parking brake pressure (pPH), the front axle service brake pressure (pBVA) being controllable to the front axle service brakes (3a) as a function of the redundant control pressure (pR) specified by the inverter control valve (140), if a conversion of the brake command (VAB, VB, VP) electrically controlled by the redundant brake control module (210) via the front axle redundant brake circuit (4a) is prevented.

15. The electronically controllable brake system (100) according to any of the preceding claims, further comprising a trailer control module (130) provided for controlling a trailer brake pressure (pBA).

16. The electronically controllable brake system (100) according to claim 15, wherein the service brake control module (110) and the trailer control module (130) are connected to one another via a second status line (15) for transmitting a second status signal (Ss2), and the trailer control module (130) is designed to receive a second fault Signal (St2) from the service brake control module (110) via the second status line (14) in the event of a fault and/or is configured to determine an error in the event of a absence of the second status signal (Ss2); and
wherein the trailer control module (130) is adapted to provide a redundant control pressure (pR) for the front axle service brake circuit (2a) and/or the front axle redundant brake circuit (4a) depending on the reception of the second error signal (St2) and/or the absence of the second status signal (Ss2).

17. The electronically controllable brake system (100) according to claim 13 and 16, wherein the parking brake module (120) and the trailer control module (130) are integrated in a common first integrated module (EPTM).

18. The electronically controllable brake system (100) according to claim 16 or 17, wherein the trailer control module (130) is connected to a trailer redundancy pressure line (26) into which the higher of the front axle service brake pressure (pBVA) and the front axle redundancy brake pressure (pRVA) is fed out as trailer redundancy pressure (pRA), wherein the trailer control module (130) is designed to control the trailer redundancy pressure (pRA) as trailer brake pressure (pBA) in dependence on the reception of the second error signal (St2) and/or in the absence of the second status signal (Ss2).

19. The electronically controllable brake system (100) according to any of claims 12 to 18, comprising a first power source (141), a second power source (142), and a third power source (143), wherein the first power source (141) is connected to the service brake control module (110), the second power source (142) is connected to the redundancy brake control module (210), and the third power source (143) is connected to at least one of the parking brake module (120) and the trailer control module (130).

20. A vehicle (200), in particular commercial vehicle (200), having an electronically controllable brake system (100) according to any of the preceding claims.

21. A method of controlling an electronically controllable brake system (100) according to any of claims 1 to 19, having at least the following steps:
- determining whether the brake command (VAB, VB, VP) can be implemented via the front axle service brake circuit (2a) and/or the rear axle service brake circuit (2b) electrically controlled by the service brake control module (110);
if a conversion of the brake command (VAB, VB, VP) via the front axle service brake circuit (2a) and/or the rear axle service brake circuit (2b) electrically controlled by the service brake control module (110) is prevented:
- determining whether the brake command (VAB, VB, VP) via the front axle redundancy brake circuit (4a) and/or the rear axle redundancy brake circuit (4b) can be implemented electrically controlled by the redundancy brake control module (210); and if a conversion of the brake command (VAB, VB, VP) via the front axle redundancy brake circuit (4a) and/or the rear axle redundancy brake circuit (4b) electrically controlled by the redundancy brake control module (210) is not prevented:
- controlling the front axle and rear axle redundancy brake pressure (pRVA, pRHA) in dependence on the redundancy brake control signal (Sr) generated by the redundancy brake control module (210) at the front axle and rear axle service brakes (3a, 3b), for converting the brake command (VAB, VB, VP) electrically controlled by the redundancy brake control module (210) via the front axle redundancy brake circuit (4a) and the rear axle redundancy brake circuit (4b).

22. The method according to claim 21, comprising:
- provisioning of a first status signal (Ss1) by the service brake control module (110) to the redundancy brake control module (210);
and in the event that an electrically controlled conversion of the brake command (VAB, VB, VP) via the front axle service brake circuit (2a) and/or the rear axle service brake circuit (2b) is prevented by the service brake control module (110):
- providing a first fault signal (St1) by the service brake control module (110), and
- receiving the first error signal (St1) at the redundancy brake control module (210); and/or
- determining a failure of the service brake control module (110) in the event of a failure of the first status signal (Ss1).

23. The method according to claim 21 or 22, comprising:
- receiving the assistance brake command (VAB) at the service brake control module (110) via a first vehicle BUS (16) from the autonomous driving unit (112); and
- receiving the assistance brake command (VAB) at the redundancy brake control module (210) via a second vehicle BUS (18) from the autonomous driving unit (112).

24. The method according to any of the preceding claims 21 to 23, comprising:
- receiving a parking brake command (VP) at the parking brake module (120) and controlling a parking brake pressure (pPH); and
- receiving a second status signal (Ss2) at the parking brake module (120);
and in the event that an electrically controlled conversion of the brake command (VAB, VB, VP) via the front axle service brake circuit (2a) and/or the rear axle service brake circuit (2b) is prevented by the service brake control module (110):
- providing the second fault signal (St2) by the service brake control module (110) to the parking brake module (120); and/or
- determining a failure of the service brake control module (110) in the event of an absence of the second status signal (Ss2); and
- controlling a redundant control pressure (pR) for the front axle service brake circuit (2a) and/or the front axle redundant brake circuit (4a) by the parking brake module (120) as a function of the reception of the second fault signal (St2) or the determined fault by the parking brake module (120).

25. The method according to any of the preceding claims 21 to 23, comprising:
- controlling a trailer brake pressure (pBA) by a trailer control module (130);
- receiving the second status signal (Ss2) at the trailer control module (130);
and in the event that an electrically controlled conversion of the brake command (VAB, VB, VP) via the front axle service brake circuit (2a) and/or the rear axle service brake circuit (2b) is prevented by the service brake control module (110):
- providing the second fault signal (St2) by the service brake control module (110) to the trailer control module (130); and/or
- determining a failure of the service brake control module (110) in the event of an absence of the second status signal (Ss2); and
- controlling a redundant control pressure (pR) for the front axle service brake circuit (2a) and/or the front axle redundant brake circuit (4a) by the parking brake module (120) as a function of the reception of the second fault signal (St2) or the detected fault by the trailer control module (130).

26. The method according to any of the preceding claims 21 to 25, comprising:
- receiving the higher of the front axle service brake pressure (pBVA) and the front axle redundancy brake pressure (pRVA) as trailer redundancy pressure (pRA) via a trailer redundancy pressure line (26) at the trailer control module (130); and
- controlling the trailer redundancy pressure (pRA) as trailer braking pressure (pBA).

## Revendications

1. Système de freinage (100) à commande électronique, en particulier système de freinage pneumatique (100) à commande électronique pour un véhicule (200), en particulier un véhicule utilitaire (200), présentant au moins :
un sous-système de freinage de service (102), comportant :
- un circuit de freinage de service d'essieu avant (2a) comportant des freins de service d'essieu avant (3a),
- un circuit de freinage de service d'essieu arrière (2b) comportant des freins de service d'essieu arrière (3b), et
- un module de commande de freinage de service (110), dans lequel une pression de freinage de service d'essieu avant (pBVA) peut être appliquée aux freins de service d'essieu avant (3a) et une pression de freinage de service d'essieu arrière (pBHA) peut être appliquée aux freins de service d'essieu arrière (3b) et le module de commande de freinage de service (110) est conçu pour générer un signal de commande de freinage de service (Sb) en fonction d'une consigne de freinage (VAB, VB, VP), dans lequel la pression de freinage de service d'essieu avant et d'essieu arrière (pBVA, pBHA) peut être générée en fonction du signal de commande de freinage de service (Sb) et fournie aux freins de service d'essieu avant et d'essieu arrière (3a, 3b) pour l'exécution électriquement commandée, par le module de commande de freinage de service (110), de la consigne de freinage (VAB, VB, VP) par l'intermédiaire du circuit de freinage de service d'essieu avant (2a) et du circuit de freinage de service d'essieu arrière (2b) ; et
**caractérisé par**
un sous-système de freinage de redondance (104), comportant :
- un circuit de freinage de redondance d'essieu avant (4a),
- un circuit de freinage de redondance d'essieu arrière (4b), et
- un module de commande de freinage de redondance (210), dans lequel une pression de freinage de redondance d'essieu avant (pRVA) peut être appliquée aux freins de service d'essieu avant (3a) et une pression de freinage de redondance d'essieu arrière (pRHA) peut être appliquée aux freins de service d'essieu arrière (3b) et le module de commande de freinage de redondance (210) est conçu pour générer un signal de commande de freinage de redondance (Sr) en fonction d'une consigne de freinage (VAB, VB, VP), dans lequel la pression de freinage de redondance d'essieu avant et d'essieu arrière (pRVA, pRHA) peut être générée en fonction du signal de commande de freinage de redondance (Sr) et fournie aux freins de service d'essieu avant et d'essieu arrière (3a, 3b) pour l'exécution électriquement commandée, par le module de commande de freinage de redondance (210), de la consigne de freinage (VAB, VB) par l'intermédiaire du circuit de freinage de redondance d'essieu avant (4a) et du circuit de freinage de redondance d'essieu arrière (4b).

2. Système de freinage (100) à commande électronique selon la revendication 1, dans lequel
le circuit de freinage de service d'essieu arrière (2b) et le circuit de freinage de redondance d'essieu arrière (4b) sont reliés à une première réserve d'air comprimé (1a), et le circuit de freinage de service d'essieu avant (2a) et le circuit de freinage de redondance d'essieu avant (4a) sont reliés à une deuxième réserve d'air comprimé (1b) ; ou
le circuit de freinage de service d'essieu arrière (2b) et le circuit de freinage de redondance d'essieu avant (4a) sont reliés à une première réserve d'air comprimé (1a), et le circuit de freinage de service d'essieu avant (2a) et le circuit de freinage de redondance d'essieu arrière (4b) sont reliés à une deuxième réserve d'air comprimé (1b).

3. Système de freinage (100) à commande électronique selon la revendication 1 ou 2, présentant :
- un circuit de freinage de stationnement (7) comportant des freins à accumulateur à ressort (8), dans lequel une pression de freinage de frein de stationnement (pPH) peut être appliquée aux freins à accumulateur à ressort (8), dans lequel la pression de freinage de frein de stationnement (pPH) peut être générée en fonction de la consigne de freinage (VAB, VB, VP) et fournie aux freins à accumulateur à ressort (8) pour l'exécution de la consigne de freinage (VAB, VB, VP) par l'intermédiaire du circuit de freinage de stationnement (7).

4. Système de freinage (100) à commande électronique selon la revendication 3, dans lequel le circuit de freinage de stationnement (7) est relié à une troisième réserve d'air comprimé (1c).

5. Système de freinage (100) à commande électronique selon l'une des revendications précédentes, dans lequel
le circuit de freinage de service d'essieu avant (2a) et le circuit de freinage de redondance d'essieu avant (4a) sont reliés aux freins de service d'essieu avant (3a) correspondants par l'intermédiaire de première et deuxième valves d'inversion (10, 11), de telle sorte que la plus élevée parmi la pression de freinage de service d'essieu avant (pBVA) et la pression de freinage de redondance d'essieu avant (pRVA) est appliquée aux freins de service d'essieu avant (3a) ; et
le circuit de freinage de service d'essieu arrière (2b) et le circuit de freinage de redondance d'essieu arrière (4b) sont reliés aux freins de service d'essieu arrière (3b) correspondants par l'intermédiaire de troisième et quatrième valves d'inversion (12, 13), de telle sorte que la plus élevée parmi la pression de freinage de service d'essieu arrière (pBHA) et la pression de freinage de redondance d'essieu arrière (pRHA) est appliquée aux freins de service d'essieu arrière (3b).

6. Système de freinage (100) à commande électronique selon l'une des revendications 1 à 4, dans lequel les freins de service d'essieu avant (3a) présentent un cylindre de freinage de service d'essieu avant (402) et un cylindre redondant de freinage d'essieu avant (404), dans lequel le circuit de freinage de service d'essieu avant (2a) est relié au cylindre de freinage de service d'essieu avant (402) et le circuit de freinage de redondance d'essieu avant (4a) est relié au cylindre redondant de freinage d'essieu avant (404), et/ou les freins de service d'essieu arrière (3b) présentent un cylindre de freinage de service d'essieu arrière (403) et un cylindre redondant de freinage d'essieu arrière (405), dans lequel le circuit de freinage de service d'essieu arrière (2b) est relié au cylindre de freinage de service d'essieu arrière (403) et le circuit de freinage de redondance d'essieu arrière (4b) est relié au cylindre redondant de freinage d'essieu arrière (405).

7. Système de freinage (100) à commande électronique selon l'une des revendications précédentes, dans lequel le module de commande de freinage de service (110) et le module de commande de freinage de redondance (210) sont reliés entre eux par l'intermédiaire d'une première ligne d'état (14) pour la transmission d'un premier signal d'état (Ss1), et le module de commande de freinage de redondance (210) est configuré pour recevoir, par l'intermédiaire de la première ligne d'état (14), un premier signal d'erreur (St1) du module de commande de freinage de service (110) au cas où une exécution électriquement commandée de la consigne de freinage (VAB, VB, VP) par l'intermédiaire du circuit de freinage de service d'essieu avant (2a) et/ou du circuit de freinage de service d'essieu arrière (2b) est empêchée par le module de commande de freinage de service (110), et/ou est configuré pour déterminer une erreur en cas d'absence du premier signal d'état (Ss1).

8. Système de freinage (100) à commande électronique selon l'une des revendications précédentes, dans lequel le module de commande de freinage de service (110) est relié à une unité (112) pour la conduite autonome par l'intermédiaire d'un premier bus de véhicule (16), et le module de commande de freinage de redondance (210) est relié à l'unité (112) pour la conduite autonome par l'intermédiaire d'un second bus de véhicule (18), pour la réception de la consigne de freinage (VAB).

9. Système de freinage (100) à commande électronique selon l'une des revendications précédentes, présentant un générateur de valeur de freinage (BST) destiné à fournir une consigne de freinage (VB) manuelle, dans lequel le générateur de valeur de freinage (BST) est relié au module de commande de freinage de service (110) par une première ligne de générateur de valeur de freinage (22) et est relié au module de commande de freinage de redondance (210) par une seconde ligne de générateur de valeur de freinage (24).

10. Système de freinage (100) à commande électronique selon l'une des revendications précédentes, dans lequel
le sous-système de freinage de service (102) présente un modulateur de service d'essieu avant (114) relié au module de commande de freinage de service (110) et un modulateur de service d'essieu arrière (116), qui sont conçus pour recevoir le signal de commande de freinage de service (Sb) et appliquer la pression de freinage de service d'essieu avant ou d'essieu arrière (pBVA, pBHA) ; et dans lequel
le sous-système de freinage de redondance (104) présente un modulateur de redondance d'essieu avant (214) relié au module de commande de freinage de redondance (210) et un modulateur de redondance d'essieu arrière (216), qui sont conçus pour recevoir le signal de commande de freinage de redondance (Sr) et appliquer la pression de freinage de redondance d'essieu avant ou d'essieu arrière (pRVA, pRHA).

11. Système de freinage (100) à commande électronique selon la revendication 10, dans lequel
le sous-système de freinage de service (102) présente des première et seconde valves ABS (118, 119) disposées chacune entre le modulateur de service d'essieu avant (114) et les freins de service d'essieu avant (3a) correspondants ; et
le sous-système de freinage de redondance (104) présente des première et seconde valves ABS (218, 219) redondantes disposées chacune entre le modulateur de redondance d'essieu avant (214) et les freins de service d'essieu avant (3a) correspondants.

12. Système de freinage (100) à commande électronique selon la revendication 3, présentant en outre un module de freinage de stationnement (120) conçu pour commander le circuit de freinage de stationnement (7), dans lequel le module de freinage de stationnement (120) applique la pression de freinage de stationnement (pPH) en fonction d'une réception d'une consigne de freinage de stationnement (VP).

13. Système de freinage (100) à commande électronique selon la revendication 12, dans lequel
le module de commande de freinage de service (110) et le module de freinage de stationnement (120) sont reliés entre eux par l'intermédiaire d'une seconde ligne d'état (15), et le module de freinage de stationnement (120) est configuré pour recevoir, en cas d'erreur, un second signal d'erreur (St2) du module de commande de freinage de service (110), par l'intermédiaire de la seconde ligne d'état (14), et/ou est configuré pour déterminer une erreur en cas d'absence du premier signal d'état (Ss1) ; et
dans lequel le module de freinage de stationnement (120) est conçu pour fournir une pression de commande (pR) redondante pour le circuit de freinage de service d'essieu avant (2a) et/ou le circuit de freinage de redondance d'essieu avant (4a), en fonction de la réception du second signal d'erreur (St2) et/ou de l'absence du premier signal d'état (Ss1).

14. Système de freinage (100) à commande électronique selon la revendication 13, dans lequel le module de freinage de stationnement (120) présente une valve de commande à inverseur (140) comportant une sortie de redondance (120.1), dans lequel la valve de commande à inverseur (140) est conçue pour générer une pression de commande (pR) redondante et pour la délivrer par l'intermédiaire de la sortie de redondance (120.1), dans lequel la pression de commande (pR) redondante est inversement proportionnelle à la pression de freinage de stationnement (pPH), dans lequel la pression de freinage de service d'essieu avant (pBVA) peut être appliquée aux freins de service d'essieu avant (3a) en fonction de la pression de commande (pR) redondante prédéfinie par la valve de commande à inverseur (140), au cas où le module de commande de freinage de redondance (210) empêche, par l'intermédiaire du circuit de freinage de redondance d'essieu avant (4a), une exécution électriquement commandée de la consigne de freinage (VAB, VB, VP).

15. Système de freinage (100) à commande électronique selon l'une des revendications précédentes, présentant en outre un module de commande de remorque (130) prévu pour l'application d'une pression de freinage de remorque (pBA).

16. Système de freinage (100) à commande électronique selon la revendication 15, dans lequel le module de commande de freinage de service (110) et le module de commande de remorque (130) sont reliés entre eux par l'intermédiaire d'une seconde ligne d'état (15) pour la transmission d'un second signal d'état (Ss2), et le module de commande de remorque (130) est configuré pour recevoir, en cas d'erreur, un second signal d'erreur (St2) du module de commande de freinage de service (110), par l'intermédiaire de la seconde ligne d'état (14), et/ou est configuré pour déterminer une erreur en cas d'absence du second signal d'état (Ss2) ; et
dans lequel le module de commande de remorque (130) est conçu pour fournir une pression de commande (pR) redondante pour le circuit de freinage de service d'essieu avant (2a) et/ou le circuit de freinage de redondance d'essieu avant (4a), en fonction de la réception du second signal d'erreur (St2) et/ou de l'absence du second signal d'état (Ss2).

17. Système de freinage (100) à commande électronique selon les revendications 13 et 16, dans lequel le module de freinage de stationnement (120) et le module de commande de remorque (130) sont intégrés dans un premier module intégré (EPTM) commun.

18. Système de freinage (100) à commande électronique selon la revendication 16 ou 17, dans lequel le module de commande de remorque (130) est relié à une ligne de pression de redondance de remorque (26) dans laquelle la plus élevée parmi la pression de freinage de service d'essieu avant (pBVA) et la pression de freinage de redondance d'essieu avant (pRVA) est appliquée comme pression de redondance de remorque (pRA), dans lequel le module de commande de remorque (130) est conçu pour appliquer la pression de redondance de remorque (pRA) comme pression de freinage de remorque (pBA) en fonction de la réception du second signal d'erreur (St2) ou de l'absence du second signal d'état (Ss2).

19. Système de freinage (100) à commande électronique selon l'une des revendications 12 à 18, présentant une première source d'alimentation (141), une deuxième source d'alimentation (142) et une troisième source d'alimentation (143), dans lequel la première source d'alimentation (141) est reliée au module de commande de freinage de service (110), la deuxième source d'alimentation (142) est reliée au module de commande de freinage de redondance (210), et la troisième source d'alimentation (143) est reliée au module de freinage de stationnement (120) et/ou au module de commande de remorque (130).

20. Véhicule (200), en particulier véhicule utilitaire (200), comportant un système de freinage (100) à commande électronique selon l'une des revendications précédentes.

21. Procédé de commande d'un système de freinage (100) à commande électronique selon l'une des revendications 1 à 19, comportant au moins les étapes suivantes :
- détermination établissant si la consigne de freinage (VAB, VB, VP) peut être exécutée de manière électriquement commandée par le module de commande de freinage de service (110), par l'intermédiaire du circuit de freinage de service d'essieu avant (2a) et/ou du circuit de freinage de service d'essieu arrière (2b) ;
au cas où une exécution électriquement commandée par le module de commande de freinage de service (110) de la consigne de freinage (VAB, VB, VP) par l'intermédiaire du circuit de freinage de service d'essieu avant (2a) et/ou du circuit de freinage de service d'essieu arrière (2b) est empêchée :
- détermination établissant si la consigne de freinage (VAB, VB, VP) peut être exécutée de manière électriquement commandée par le module de commande de freinage de redondance (210), par l'intermédiaire du circuit de freinage de redondance d'essieu avant (4a) et/ou du circuit de freinage de redondance d'essieu arrière (4b) ; et au cas où une exécution électriquement commandée par le module de commande de freinage de redondance (210) de la consigne de freinage (VAB, VB, VP), par l'intermédiaire du circuit de freinage de redondance d'essieu avant (4a) et/ou du circuit de freinage de redondance d'essieu arrière (4b) n'est pas empêchée :
- application de la pression de freinage de redondance d'essieu avant et d'essieu arrière (pRVA, pRHA), en fonction du signal de commande de freinage de redondance (Sr) généré par le module de commande de freinage de redondance (210), aux freins de service d'essieu avant et d'essieu arrière (3a, 3b), pour l'exécution électriquement commandée, par le module de commande de freinage de redondance (210), de la consigne de freinage (VAB, VB, VP) par l'intermédiaire du circuit de freinage de redondance d'essieu avant (4a) et du circuit de freinage de redondance d'essieu arrière (4b).

22. Procédé selon la revendication 21, présentant :
- la fourniture d'un premier signal d'état (Ss1) au module de commande de freinage de redondance (210) par le module de commande de freinage de service (110) ;
et au cas où une exécution électriquement commandée de la consigne de freinage (VAB, VB, VP) par l'intermédiaire du circuit de freinage de service d'essieu avant (2a) et/ou du circuit de freinage de service d'essieu arrière (2b) par le module de commande de freinage de service (110) est empêchée :
- la fourniture d'un premier signal d'erreur (St1) par le module de commande de freinage de service (110), et
- la réception du premier signal d'erreur (St1) sur le module de commande de freinage de redondance (210) ; et/ou
- la détermination d'une erreur du module de commande de freinage de service (110) en cas d'absence du premier signal d'état (Ss1).

23. Procédé selon la revendication 21 ou 22, présentant :
- la réception de la consigne de freinage d'assistance (VAB) sur le module de commande de freinage de service (110) par l'intermédiaire d'un premier bus de véhicule (16) de l'unité (112) pour la conduite autonome ; et
- la réception de la consigne de freinage d'assistance (VAB) sur le module de commande de freinage de redondance (210) par l'intermédiaire d'un second bus de véhicule (18) de l'unité (112) pour la conduite autonome.

24. Procédé selon l'une des revendications 21 à 23 précédentes, présentant :
- la réception d'une consigne de freinage de stationnement (VP) sur le module de freinage de stationnement (120) et l'application d'une pression de freinage de stationnement (pPH) ; et
- la réception d'un second signal d'état (Ss2) sur le module de freinage de stationnement (120) ;
et au cas où une exécution électriquement commandée de la consigne de freinage (VAB, VB, VP) par l'intermédiaire du circuit de freinage de service d'essieu avant (2a) et/ou du circuit de freinage de service d'essieu arrière (2b) par le module de commande de freinage de service (110) est empêchée :
- la fourniture du second signal d'erreur (St2) au module de freinage de stationnement (120) par le module de commande de freinage de service (110) ; et/ou
- la détermination d'une erreur du module de commande de freinage de service (110) en cas d'absence du second signal d'état (Ss2) ; et
- l'application d'une pression de commande (pR) redondante pour le circuit de freinage de service d'essieu avant (2a) et/ou le circuit de freinage de redondance d'essieu avant (4a) par le module de freinage de stationnement (120) en fonction de la réception du second signal d'erreur (St2) ou de l'erreur déterminée par le module de freinage de stationnement (120).

25. Procédé selon l'une des revendications 21 à 23 précédentes, présentant :
- l'application d'une pression de freinage de remorque (pBA) par un module de commande de remorque (130) ;
- la réception du second signal d'état (Ss2) sur le module de commande de remorque (130) ;
et au cas où une exécution électriquement commandée de la consigne de freinage (VAB, VB, VP) par l'intermédiaire du circuit de freinage de service d'essieu avant (2a) et/ou du circuit de freinage de service d'essieu arrière (2b) par le module de commande de freinage de service (110) est empêchée :
- la fourniture du second signal d'erreur (St2) au module de commande de remorque (130) par le module de commande de freinage de service (110) ; et/ou
- la détermination d'une erreur du module de commande de freinage de service (110) en cas d'absence du second signal d'état (Ss2) ; et
- l'application d'une pression de commande (pR) redondante pour le circuit de freinage de service d'essieu avant (2a) et/ou le circuit de freinage de redondance d'essieu avant (4a) par le module de freinage de stationnement (120) en fonction de la réception du second signal d'erreur (St2) ou de l'erreur déterminée par le module de commande de remorque (130).

26. Procédé selon l'une des revendications 21 à 25 précédentes, présentant :
- la réception de la plus élevée parmi la pression de freinage de service d'essieu avant (pBVA) et la pression de freinage de redondance d'essieu avant (pRVA) comme pression de redondance de remorque (pRA) sur le module de commande de remorque (130) par l'intermédiaire d'une ligne de pression de redondance de remorque (26) ; et
- l'application de la pression de redondance de remorque (pRA) comme pression de freinage de remorque (pBA).
